(19) Europäisches Patentamt
European Patent Office
Office européen des brevets

(11) **EP 4 582 845 A2**

(12) **EUROPEAN PATENT APPLICATION**

(43) Date of publication:
**09.07.2025 Bulletin 2025/28**

(51) International Patent Classification (IPC):
**G02B 7/02** (2021.01)    **H04N 23/55** (2023.01)

(21) Application number: **25150085.6**

(52) Cooperative Patent Classification (CPC):
**G02B 7/021; H04N 23/55**

(22) Date of filing: **02.01.2025**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.01.2024 US 202463617800 P**

(71) Applicant: **Largan Precision Co. Ltd.**
**Taichung City 408 (TW)**

(72) Inventors:
• **Chang, Pei-Chi**
**408 Taichung City (TW)**
• **Su, Heng-Yi**
**408 Taichung City (TW)**
• **Weng, Wei-Hung**
**408 Taichung City (TW)**

(74) Representative: **Lippert Stachow Patentanwälte Rechtsanwälte**
**Partnerschaft mbB**
**Frankenforster Strasse 135-137**
**51427 Bergisch Gladbach (DE)**

(54) **IMAGING LENS ASSEMBLY, CAMERA MODULE AND ELECTRONIC DEVICE**

(57)    An imaging lens assembly includes an optical reflecting element and an optical reflecting element embedded carrier. The optical reflecting element embedded carrier is for fixing the optical reflecting element, and the optical reflecting element is embedded thereinto, wherein the optical reflecting element and the optical reflecting element embedded carrier are integrally formed by insert molding. The optical reflecting element has a normal axis, the optical reflecting element is for folding an incident light path into an exiting light path symmetrically relative to the normal axis. The optical reflecting element includes an optical effective surface, a relative surface, an outer diameter surface and a connecting surface. The relative surface is disposed relatively to the optical effective surface. The connecting surface connects the optical effective surface and the outer diameter surface. The optical reflecting element embedded carrier includes a covering portion disposed on the connecting surface.

Fig. 1D

EP 4 582 845 A2

**Description**

**BACKGROUND**

Technical Field

The present disclosure relates to an imaging lens assembly and a camera module. More particularly, the present disclosure relates to an imaging lens assembly and a camera module applicable to portable electronic devices.

Description of Related Art

In recent years, portable electronic devices have developed rapidly. For example, intelligent electronic devices and tablets have been filled in the lives of modern people, and camera modules mounted on portable electronic devices have also prospered. However, as technology advances, the quality requirements of the camera module are becoming higher and higher. Therefore, a camera module, which can enhance the image quality, needs to be developed.

**SUMMARY**

According to one aspect of the present disclosure, an imaging lens assembly includes an optical reflecting element and an optical reflecting element embedded carrier. The optical reflecting element has a normal axis, the optical reflecting element for folding an incident light path into an exiting light path symmetrically relative to the normal axis. The optical reflecting element embedded carrier is for fixing the optical reflecting element, and the optical reflecting element is embedded thereinto, wherein the optical reflecting element and the optical reflecting element embedded carrier are integrally formed by insert molding. The optical reflecting element includes an optical effective surface, a relative surface, an outer diameter surface and a connecting surface. The normal axis passes through the optical effective surface perpendicularly, wherein an area passed through by the normal axis is defined as an optical effective area. The relative surface is disposed relatively to the optical effective surface. The outer diameter surface surrounds the optical effective surface and defines an edge contour, and the edge contour defines a maximum contour area. The connecting surface connects the optical effective surface and the outer diameter surface. The optical effective surface is planar. The optical reflecting element embedded carrier includes a covering portion disposed on the connecting surface. The edge contour of the outer diameter surface is covered by the covering portion of the optical reflecting element embedded carrier corresponding to an observation along a direction parallel to the normal axis. When the maximum contour area is Ac, the optical effective area is Ao, and a height difference between the optical effective surface and one surface of the covering portion along the direction parallel to the normal axis is $\Delta H$, the following conditions are satisfied: $0 \text{ mm}^2 < \text{Ao} < \text{Ac} \leq 250 \text{ mm}^2$; and $-0.15 \text{ mm} \leq \Delta H \leq 0.005 \text{ mm}$.

According to the imaging lens assembly of the foregoing aspect, the optical reflecting element embedded carrier further includes a relative portion disposed between the outer diameter surface and the relative surface, and the covering portion and the relative portion are overlapped along the direction parallel to the normal axis.

According to the imaging lens assembly of the foregoing aspect, the optical reflecting element embedded carrier further includes a relative portion disposed between the outer diameter surface and the relative surface, and the covering portion and the relative portion are not overlapped along the direction parallel to the normal axis.

According to the imaging lens assembly of the foregoing aspect, the optical effective surface of the optical reflecting element has a surface accuracy PV with a detection wavelength $\lambda$, an included angle $\theta'$ is between the incident light path and the normal axis, and the following conditions are satisfied: $PV < \lambda/5$; and $0 \text{ degrees} < \theta' < 90 \text{ degrees}$.

According to the imaging lens assembly of the foregoing aspect, when the maximum contour area is Ac, and the optical effective area is Ao, the following condition is satisfied: $0 \text{ mm}^2 < \text{Ao} < \text{Ac} \leq 200 \text{ mm}^2$.

According to the imaging lens assembly of the foregoing aspect, when the height difference between the optical effective surface and the surface of the covering portion along the direction parallel to the normal axis is $\Delta H$, the following condition is satisfied: $-0.1 \text{ mm} \leq \Delta H \leq 0.003 \text{ mm}$.

According to the imaging lens assembly of the foregoing aspect, the optical reflecting element embedded carrier further includes a positioning structure.

According to the imaging lens assembly of the foregoing aspect, the imaging lens assembly has an optical axis, the optical axis and the incident light path are parallel to each other.

According to one aspect of the present disclosure, a camera module includes the imaging lens assembly of the aforementioned aspect and an image sensor, wherein the image sensor is disposed on an image surface of the camera module.

According to one aspect of the present disclosure, an electronic device includes the camera module of the aforementioned aspect.

According to one aspect of the present disclosure, an imaging lens assembly includes an optical reflecting element and an optical reflecting element embedded carrier. The optical reflecting element has a normal axis, the optical reflecting element is for folding an incident light path into an exiting light path symmetrically relative to the normal axis. The optical reflecting element embedded carrier is for fixing the optical reflecting element, and the optical reflecting element is embedded thereinto, wherein the optical reflecting element and the optical reflecting element embedded carrier are integrally formed by insert molding. The optical reflecting element includes an optical effective surface, a relative surface, an outer diameter surface and a connecting surface. The normal axis passes through the optical effective surface perpendicularly, wherein an area passed through by the normal axis is defined as an optical effective area. The relative surface is disposed relatively to the optical effective surface. The outer diameter surface surrounds the optical effective surface and defines an edge contour, and the edge contour defines a maximum contour area. The connecting surface connects the optical effective surface and the outer diameter surface. The optical effective surface is planar. The optical reflecting element embedded carrier includes a covering portion disposed on the connecting surface. The edge contour of the outer diameter surface is covered by the covering portion of the optical reflecting element embedded carrier corresponding to an observation along a direction parallel to the normal axis. When the maximum contour area is Ac, the optical effective area is Ao, and an angle of a range of the maximum contour area covered by the covering portion along a circumferential direction around the normal axis is $\theta$, the following conditions are satisfied: $0 \text{ mm}^2 < Ao < Ac \leq 250 \text{ mm}^2$; and $180$ degrees $\leq \theta \leq 360$ degrees.

According to the imaging lens assembly of the foregoing aspect, the optical reflecting element embedded carrier further includes a relative portion disposed between the outer diameter surface and the relative surface, and the covering portion and the relative portion are overlapped along the direction parallel to the normal axis.

According to the imaging lens assembly of the foregoing aspect, the optical reflecting element embedded carrier further includes a relative portion disposed between the outer diameter surface and the relative surface, and the covering portion and the relative portion are not overlapped along the direction parallel to the normal axis.

According to the imaging lens assembly of the foregoing aspect, the optical effective surface of the optical reflecting element has a surface accuracy PV with a detection wavelength $\lambda$, an included angle $\theta'$ is between the incident light path and the normal axis, and the following conditions are satisfied: $PV < \lambda/5$; and $0$ degrees $< \theta' < 90$ degrees.

According to the imaging lens assembly of the foregoing aspect, when the maximum contour area is Ac, and the optical effective area is Ao, the following condition is satisfied: $0 \text{ mm}^2 < Ao < Ac \leq 200 \text{ mm}^2$.

According to one aspect of the present disclosure, an imaging lens assembly includes an optical reflecting element and an optical reflecting element embedded carrier. The optical reflecting element has a normal axis, the optical reflecting element is for folding an incident light path into an exiting light path symmetrically relative to the normal axis. The optical reflecting element embedded carrier is for fixing the optical reflecting element, and the optical reflecting element is embedded thereinto, wherein the optical reflecting element and the optical reflecting element embedded carrier are integrally formed by insert molding. The optical reflecting element includes an optical effective surface, a relative surface, an outer diameter surface and a connecting surface. The normal axis passes through the optical effective surface perpendicularly, wherein an area passed through by the normal axis is defined as an optical effective area. The relative surface is disposed relatively to the optical effective surface. The outer diameter surface surrounds the optical effective surface and defines an edge contour, and the edge contour defines a maximum contour area. The connecting surface connects the optical effective surface and the outer diameter surface. The optical effective surface is planar. The optical reflecting element embedded carrier includes a covering portion disposed on the connecting surface. The edge contour of the outer diameter surface is covered by the covering portion of the optical reflecting element embedded carrier corresponding to an observation along a direction parallel to the normal axis. When a height difference between the optical effective surface and one surface of the covering portion along the direction parallel to the normal axis is $\Delta H$, the following condition is satisfied: $-0.15 \text{ mm} \leq \Delta H \leq 0.005 \text{ mm}$.

According to the imaging lens assembly of the foregoing aspect, the optical reflecting element embedded carrier further includes a relative portion disposed between the outer diameter surface and the relative surface, and the covering portion and the relative portion are overlapped along the direction parallel to the normal axis.

According to the imaging lens assembly of the foregoing aspect, the optical reflecting element embedded carrier further includes a relative portion disposed between the outer diameter surface and the relative surface, and the covering portion and the relative portion are not overlapped along the direction parallel to the normal axis.

According to the imaging lens assembly of the foregoing aspect, the optical effective surface of the optical reflecting element has a surface accuracy PV with a detection wavelength $\lambda$, an included angle $\theta'$ is between the incident light path and the normal axis, and the following conditions are satisfied: $PV < \lambda/5$; and $0$ degrees $< \theta' < 90$ degrees.

According to the imaging lens assembly of the foregoing aspect, when the height difference between the optical effective surface and the surface of the covering portion along the direction parallel to the normal axis is $\Delta H$, the following condition is satisfied: $-0.1 \text{ mm} \leq \Delta H \leq 0.003 \text{ mm}$.

According to one aspect of the present disclosure, an imaging lens assembly includes an optical reflecting element and an optical reflecting element embedded carrier. The optical reflecting element has a normal axis, the optical reflecting element is for folding an incident light path into an exiting light path symmetrically relative to the normal axis. The optical reflecting element embedded carrier is for fixing the optical reflecting element, and the optical reflecting element is embedded thereinto, wherein the optical reflecting element and the optical reflecting element embedded carrier are integrally formed by insert molding. The optical reflecting element includes an optical effective surface, a relative surface, an outer diameter surface and a connecting surface. The normal axis passes through the optical effective surface perpendicularly, wherein an area passed through by the normal axis is defined as an optical effective area. The relative surface is disposed relatively to the optical effective surface. The outer diameter surface surrounds the optical effective surface and defines an edge contour, and the edge contour defines a maximum contour area. The connecting surface connects the optical effective surface and the outer diameter surface. The optical effective surface is planar. The optical reflecting element embedded carrier includes a covering portion disposed on the connecting surface. The edge contour of the outer diameter surface is covered by the covering portion of the optical reflecting element embedded carrier corresponding to an observation along a direction parallel to the normal axis. The optical reflecting element embedded carrier further includes a stepping structure, the stepping structure includes a stepping surface disposed adjacent to the optical effective surface. When a height difference between the stepping surface and one surface of the covering portion along the direction parallel to the normal axis is $\Delta E$, the following condition is satisfied: -0.25 mm $\leq \Delta E \leq$ 0.25 mm.

According to the imaging lens assembly of the foregoing aspect, the optical reflecting element embedded carrier further includes a relative portion disposed between the outer diameter surface and the relative surface, and the covering portion and the relative portion are overlapped along the direction parallel to the normal axis.

According to the imaging lens assembly of the foregoing aspect, the optical reflecting element embedded carrier further includes a relative portion disposed between the outer diameter surface and the relative surface, and the covering portion and the relative portion are not overlapped along the direction parallel to the normal axis.

According to the imaging lens assembly of the foregoing aspect, the optical effective surface of the optical reflecting element has a surface accuracy PV with a detection wavelength $\lambda$, an included angle $\theta'$ is between the incident light path and the normal axis, and the following conditions are satisfied: PV < $\lambda/5$; and 0 degrees < $\theta'$ < 90 degrees.

According to the imaging lens assembly of the foregoing aspect, when the height difference between the stepping surface and the surface of the covering portion along the direction parallel to the normal axis is $\Delta E$, the following condition is satisfied: -0.2 mm $\leq \Delta E \leq$ 0.2 mm.


**BRIEF DESCRIPTION OF THE DRAWINGS**

Fig. 1A is a schematic view of an imaging lens assembly according to the 1st example of the 1st embodiment of the present disclosure.

Fig. 1B is a side view of the imaging lens assembly according to the 1st example of the 1st embodiment of Fig. 1A.

Fig. 1C is a cross-sectional view along Line 1C-1C of Fig. 1B.

Fig. 1D is a schematic view of the optical reflecting element and the optical reflecting element embedded carrier of the imaging lens assembly according to the 1st example of the 1st embodiment of Fig. 1A.

Fig. 1E is a schematic view of an optical effective surface, a connecting surface and an outer diameter surface of the optical reflecting element of Fig. 1D.

Fig. 1F is a plane view of the optical reflecting element and the optical reflecting element embedded carrier of Fig. 1D.

Fig. 1G is a side view of the optical reflecting element embedded carrier of Fig. 1D.

Fig. 1H is another side view of the optical reflecting element embedded carrier of Fig. 1D.

Fig. 1I is a cross-sectional view along Line 1I-1I of Fig. 1F.

Fig. 1J is a cross-sectional view along Line 1J-1J of Fig. 1F.

Fig. 1K is an enlarged view of the area 1K of Fig. 1J.

Fig. 1L is a cross-sectional view along Line 1L-1L of Fig. 1F.

Fig. 1M is an enlarged view of the area 1M of Fig. 1L.

Fig. 1N is a schematic view of an optical reflecting element and an optical reflecting element embedded carrier of the imaging lens assembly according to the 2nd example of the 1st embodiment of the present disclosure.

Fig. 1O is a schematic view of an optical effective surface, a connecting surface and an outer diameter surface of the optical reflecting element of Fig. 1N.

Fig. 1P is a plane view of the optical reflecting element and the optical reflecting element embedded carrier of Fig. 1N.

Fig. 1Q is a side view of the optical reflecting element embedded carrier of Fig. 1N.

Fig. 1R is another side view of the optical reflecting element embedded carrier of Fig. 1N.

Fig. 1S is a cross-sectional view along Line 1S-1S of Fig. 1P.

Fig. 1T is a cross-sectional view along Line 1T-1T of Fig. 1P.

Fig. 1U is a cross-sectional view along Line 1U-1U of Fig. 1P.

Fig. 1V is an enlarged view of the area 1V of Fig. 1U.

Fig. 1W is a schematic view of measuring directions of surface accuracies of the 1st and the 2nd examples of the 1st embodiment of Fig. 1A.

Fig. 2A is a schematic view of an optical reflecting element and an optical reflecting element embedded carrier of the imaging lens assembly according to the 1st example of the 2nd embodiment of the present disclosure.

Fig. 2B is another schematic view of the optical reflecting element and the optical reflecting element embedded carrier of Fig. 2A.

Fig. 2C is a plane view of the optical reflecting element and the optical reflecting element embedded carrier of Fig. 2A.

Fig. 2D is a side view of the optical reflecting element embedded carrier of Fig. 2A.

Fig. 2E is another side view of the optical reflecting element embedded carrier of Fig. 2A.

Fig. 2F is a cross-sectional view along Line 2F-2F of Fig. 2C.

Fig. 2G is a cross-sectional view along Line 2G-2G of Fig. 2C.

Fig. 2H is an enlarged view of the area 2H of Fig. 2F.

Fig. 2I is a cross-sectional view along Line 2I-2I of Fig. 2C.

Fig. 2J is an enlarged view of the area 2J of Fig. 2I.

Fig. 2K is a schematic view of an optical reflecting element and an optical reflecting element embedded carrier of the imaging lens assembly according to the 2nd example of the 2nd embodiment of the present disclosure.

Fig. 3A is a schematic view of an optical reflecting element and an optical reflecting element embedded carrier of the imaging lens assembly according to the 1st example of the 3rd embodiment of the present disclosure.

Fig. 3B is another schematic view of the optical reflecting element and the optical reflecting element embedded carrier of Fig. 3A.

Fig. 3C is a plane view of the optical reflecting element and the optical reflecting element embedded carrier of Fig. 3A.

Fig. 3D is a side view of the optical reflecting element embedded carrier of Fig. 3A.

Fig. 3E is another side view of the optical reflecting element embedded carrier of Fig. 3A.

Fig. 3F is a cross-sectional view along Line 3F-3F of Fig. 3C.

Fig. 3G is a cross-sectional view along Line 3G-3G of Fig. 3C.

Fig. 3H is a cross-sectional view along Line 3H-3H of Fig. 3C.

Fig. 3I is an enlarged view of the area 3I of Fig. 3G.

Fig. 3J is a schematic view of an optical reflecting element and an optical reflecting element embedded carrier of the imaging lens assembly according to the 2nd example of the 3rd embodiment of the present disclosure.

Fig. 3K is a side view of the optical reflecting element embedded carrier of Fig. 3J.

Fig. 3L is another side view of the optical reflecting element embedded carrier of Fig. 3J.

Fig. 3M is a cross-sectional view along Line 3M-3M of Fig. 3J.

Fig. 3N is a cross-sectional view along Line 3N-3N of Fig. 3J.

Fig. 3O is a cross-sectional view along Line 3O-3O of Fig. 3J.

Fig. 4A is a schematic view of an optical reflecting element and an optical reflecting element embedded carrier of the imaging lens assembly according to the 1st example of the 4th embodiment of the present disclosure.

Fig. 4B is another schematic view of the optical reflecting element and the optical reflecting element embedded carrier of Fig. 4A.

Fig. 4C is a plane view of the optical reflecting element and the optical reflecting element embedded carrier of Fig. 4A.

Fig. 4D is a side view of the optical reflecting element embedded carrier of Fig. 4A.

Fig. 4E is another side view of the optical reflecting element embedded carrier of Fig. 4A.

Fig. 4F is a cross-sectional view along Line 4F-4F of Fig. 4C.

Fig. 4G is a cross-sectional view along Line 4G-4G of Fig. 4C.

Fig. 4H is a cross-sectional view along Line 4H-4H of Fig. 4C.

Fig. 4I is an enlarged view of the area 4I of Fig. 4H.

Fig. 4J is a schematic view of an optical reflecting element and an optical reflecting element embedded carrier of the imaging lens assembly according to the 2nd example of the 4th embodiment of the present disclosure.

Fig. 4K is a plane view of the optical reflecting element and the optical reflecting element embedded carrier of Fig. 4J.

Fig. 4L is a side view of the optical reflecting element embedded carrier of Fig. 4J.

Fig. 4M is another side view of the optical reflecting element embedded carrier of Fig. 4J.

Fig. 4N is a cross-sectional view along Line 4N-4N of Fig. 4K.

Fig. 4O is a cross-sectional view along Line 4O-4O of Fig. 4K.

Fig. 4P is a cross-sectional view along Line 4P-4P of Fig. 4K.

Fig. 4Q is an enlarged view of the area 4Q of Fig. 4P.

Fig. 5A is a schematic view of an optical reflecting element and an optical reflecting element embedded carrier of the imaging lens assembly according to the 1st example of the 5th embodiment of the present disclosure.

Fig. 5B is another schematic view of the optical reflecting element and the optical reflecting element embedded carrier of Fig. 5A.

Fig. 5C is a plane view of the optical reflecting element and the optical reflecting element embedded carrier of Fig. 5A.

Fig. 5D is a side view of the optical reflecting element embedded carrier of Fig. 5A.

Fig. 5E is another side view of the optical reflecting element embedded carrier of Fig. 5A.

Fig. 5F is a cross-sectional view along Line 5F-5F of Fig. 5C.

Fig. 5G is a cross-sectional view along Line 5G-5G of Fig. 5C.

Fig. 5H is a cross-sectional view along Line 5H-5H of Fig. 5C.

Fig. 5I is an enlarged view of the area 5I of Fig. 5H.

Fig. 6A is a schematic view of an electronic device according to the 6th embodiment of the present disclosure.

Fig. 6B is another schematic view of the electronic device according to the 6th embodiment of Fig. 6A.

Fig. 6C is a schematic view of an image captured via the electronic device according to the 6th embodiment of Fig. 6A.

Fig. 6D is another schematic view of the image captured via the electronic device according to the 6th embodiment of Fig. 6A.

Fig. 6E is the other schematic view of the image captured via the electronic device according to the 6th embodiment of Fig. 6A.

Fig. 7 is a schematic view of an electronic device according to the 7th embodiment of the present disclosure.

Fig. 8A is a schematic view of a vehicle instrument according to the 8th embodiment of the present disclosure.

Fig. 8B is another schematic view of the vehicle instrument according to the 8th embodiment in Fig. 8A.

Fig. 8C is another schematic view of the vehicle instrument according to the 8th embodiment in Fig. 8A.

Fig. 9 is a schematic view of an electronic device according to the 9th embodiment of the present disclosure.

## DETAILED DESCRIPTION

The present disclosure provides an imaging lens assembly, which includes an optical reflecting element and an optical reflecting element embedded carrier. The optical reflecting element has a normal axis, the optical reflecting element is for folding an incident light path into an exiting light path symmetrically relative to the normal axis. The optical reflecting element includes an optical effective surface, a relative surface, an outer diameter surface and a connecting surface. The normal axis passes through the optical effective surface perpendicularly, wherein an area passed through by the normal axis is defined as an optical effective area. The relative surface is disposed relatively to the optical effective surface. The outer diameter surface surrounds the optical effective surface and defines an edge contour, and the edge contour defines a maximum contour area. The connecting surface connects the optical effective surface and the outer diameter surface. The optical reflecting element embedded carrier is for fixing the optical reflecting element, and the optical reflecting element is embedded thereinto, wherein the optical reflecting element and the optical reflecting element embedded carrier are integrally formed by insert molding. The optical effective surface is planar. The optical reflecting element embedded carrier includes a covering portion disposed on the connecting surface. The edge contour of the outer diameter surface is covered by the covering portion of the optical reflecting element embedded carrier corresponding to an observation along a direction parallel to the normal axis. When the maximum contour area is Ac, the optical effective area is Ao, and a height difference between the optical effective surface and one surface of the covering portion along the direction parallel to the normal axis is $\Delta H$, the following conditions are satisfied: $0 \text{ mm}^2 < Ao < Ac \le 250 \text{ mm}^2$; and $-0.15 \text{ mm} \le \Delta H \le 0.005 \text{ mm}$. Therefore, it is favorable for obtaining the compactness of the imaging lens assembly by folding the light path via the optical reflecting element.

Specifically, the optical effective surface can provide the normal axis, so that the incident light path can be reflected to the exiting light path symmetrically relative to the normal axis. The optical effective area can be defined as the sum of the exposed area of the area of the optical reflecting element deducting the area of the maximum contour area covered by the covering portion of the optical reflecting element embedded carrier, but the present disclosure will not be limited thereto. The optical reflecting element can be a mirror element, the optical reflecting element embedded carrier can be made of black plastic material, but the present disclosure will not be limited thereto. The edge contour can be a contour line that the outer diameter surface projects along the direction parallel to the normal axis on a plane passing through the normal axis perpendicularly, and the maximum contour area is the area covered by the contour line, wherein the plane and the optical effective surface are on the same plane. In the optical reflecting element, the edge contour of the outer diameter surface can be fully or partial covered by the covering portion of the optical reflecting element embedded carrier. Along the direction parallel to the normal axis, when the optical effective area is higher than the surface of the covering portion, $\Delta H$ can be defined as a positive value; along the direction parallel to the normal axis, when the optical effective area is lower than the surface of the covering portion, $\Delta H$ can be defined as a negative value.

The optical reflecting element embedded carrier can further include a relative portion disposed between the outer diameter surface and the relative surface, and the covering portion and the relative portion are overlapped along the direction parallel to the normal axis. Therefore, the optical reflecting element embedded carrier can position the optical reflecting element by the covering portion and the relative portion, so that it is favorable for reducing the assembling error between the optical reflecting element and the optical reflecting element embedded carrier; that is, loose connection between the optical reflecting element and the optical reflecting element embedded carrier can be avoided.

The optical reflecting element embedded carrier can further include a relative portion disposed between the outer diameter surface and the relative surface, and the covering portion and the relative portion are not overlapped along the direction parallel to the normal axis. Therefore, it is favorable for improving the mold design margin by offsetting the arrangement between the covering portion and the relative portion of the optical reflecting element embedded carrier. In detail, the arrangement between the covering portion and the relative portion of the optical reflecting element embedded carrier can be unaligned, such as, can be alternatively arranged along a circumferential direction around the normal axis, but the present disclosure will not be limited thereto.

The optical effective surface of the optical reflecting element has a surface accuracy PV with a detection wavelength $\lambda$, an included angle $\theta'$ is between the incident light path and the normal axis, and the following conditions are satisfied: $PV < \lambda/5$; and $0$ degrees $< \theta' < 90$ degrees. Therefore, it is favorable for ensuring the image after reflection without distortion so as to enhance the image quality by arranging better range of the surface accuracy. Specifically, $\lambda$ can be 625 nm, $\lambda/5$ can be 125 nm, $\lambda/10$ can be 62.5 nm, or $\lambda$ can be 632.8 nm, $\lambda/5$ can be 126.56 nm, $\lambda/10$ can be 63.28 nm, but the present disclosure will not be limited thereto. $\theta'$ can be 45 degrees, but the present disclosure will not be limited thereto.

When the maximum contour area is Ac, the optical effective area is Ao, and the following condition is satisfied: $0 \text{ mm}^2 < Ao < Ac \le 200 \text{ mm}^2$. Therefore, it is favorable for obtaining the compactness of the size of the imaging lens assembly by arranging the better range of the area.

When the height difference between the optical effective surface and the surface of the covering portion along the direction parallel to the normal axis is $\Delta H$, the following condition is satisfied: $-0.1 \text{ mm} \le \Delta H \le 0.003 \text{ mm}$. Therefore, the optical effective surface will not protrude from the surface of the covering portion of the optical reflecting element embedded carrier, so that it is favorable for ensuring that the optical effective surface will not be crushed by the mold so as to increase the yield of products.

The optical reflecting element embedded carrier can further include a positioning structure. The optical reflecting element and the optical reflecting element embedded carrier can be precisely positioned via the positioning structure, so that the quality of products can be enhanced. In detail, during the insert molding process, the optical reflecting element can be positioned with a positioning structure of the mold and then the plastic insert molding can be proceeded so as to form the optical reflecting element embedded carrier covering the optical reflecting element. After demolding, a hole left on the optical reflecting element embedded carrier corresponding to the positioning structure of the mold is the positioning structure of the optical reflecting element embedded carrier.

The imaging lens assembly can have an optical axis, the optical axis and the incident light path are parallel to each other. Under the specific conditions, the optical axis can be defined as the incident light path, that is, the optical axis is the incident light path, which can also be folded by the optical reflecting element.

The present disclosure provides a camera module, which includes the aforementioned imaging lens assembly and an image sensor. The image sensor disposed on an image surface of the camera module.

The present disclosure provides an electronic device, which includes the aforementioned camera module.

The present disclosure provides an imaging lens assembly, which includes an optical reflecting element and an optical reflecting element embedded carrier. The optical reflecting element has a normal axis, the optical reflecting element is for folding an incident light path into an exiting light path symmetrically relative to the normal axis. The optical reflecting element includes an optical effective surface, a relative surface, an outer diameter surface and a connecting surface. The normal axis passes through the optical effective surface perpendicularly, wherein an area passed through by the normal axis is defined as an optical effective area. The relative surface is disposed relatively to the optical effective surface. The outer diameter surface surrounds the optical effective surface and defines an edge contour, and the edge contour defines a maximum contour area. The connecting surface connects the optical effective surface and the outer diameter surface. The optical reflecting element embedded carrier is for fixing the optical reflecting element, and the optical reflecting element is embedded thereinto, wherein the optical reflecting element and the optical reflecting element embedded carrier are integrally formed by insert molding. The optical effective surface is planar. The optical reflecting element embedded carrier includes a covering portion disposed on the connecting surface. The edge contour of the outer diameter surface is covered by the covering portion of the optical reflecting element embedded carrier corresponding to an observation along a direction parallel to the normal axis. When the maximum contour area is Ac, the optical effective area is Ao, and an angle of a range of the maximum contour area covered by the covering portion along a circumferential direction around the normal axis is $\theta$, the following conditions are satisfied: $0 \, mm^2 < Ao < Ac \leq 250 \, mm^2$; and $180$ degrees $\leq \theta \leq 360$ degrees. Therefore, it is favorable for obtaining the compactness of the imaging lens assembly by folding the light path via the optical reflecting element.

The optical reflecting element embedded carrier can further include a relative portion disposed between the outer diameter surface and the relative surface, and the covering portion and the relative portion are overlapped along the direction parallel to the normal axis. Therefore, the optical reflecting element embedded carrier can position the optical reflecting element by the covering portion and the relative portion, so that it is favorable for reducing the assembling error between the optical reflecting element and the optical reflecting element embedded carrier.

The optical reflecting element embedded carrier can further include a relative portion disposed between the outer diameter surface and the relative surface, and the covering portion and the relative portion are not overlapped along the direction parallel to the normal axis. Therefore, it is favorable for improving the mold design margin by offsetting the arrangement between the covering portion and the relative portion of the optical reflecting element embedded carrier.

The optical effective surface of the optical reflecting element has a surface accuracy PV with a detection wavelength $\lambda$, an included angle $\theta'$ is between the incident light path and the normal axis, and the following conditions are satisfied: $PV < \lambda/5$; and $0$ degrees $< \theta' < 90$ degrees. Therefore, it is favorable for ensuring the image after reflection without distortion so as to enhance the image quality by arranging better range of the surface accuracy.

When the maximum contour area is Ac, and the optical effective area is Ao, the following condition is satisfied: $0 \, mm^2 < Ao < Ac \leq 200 \, mm^2$. Therefore, it is favorable for obtaining the compactness of the size of the imaging lens assembly by arranging the better range of the area.

The present disclosure provides an imaging lens assembly, which includes an optical reflecting element and an optical reflecting element embedded carrier. The optical reflecting element has a normal axis, the optical reflecting element is for folding an incident light path into an exiting light path symmetrically relative to the normal axis. The optical reflecting element includes an optical effective surface, a relative surface, an outer diameter surface and a connecting surface. The normal axis passes through the optical effective surface perpendicularly, wherein an area passed through by the normal axis is defined as an optical effective area. The relative surface is disposed relatively to the optical effective surface. The outer diameter surface surrounds the optical effective surface and defines an edge contour, and the edge contour defines a maximum contour area. The connecting surface connects the optical effective surface and the outer diameter surface. The optical reflecting element embedded carrier is for fixing the optical reflecting element, and the optical reflecting element is embedded thereinto, wherein the optical reflecting element and the optical reflecting element embedded carrier are integrally formed by insert molding. The optical effective surface is planar. The optical reflecting element embedded carrier includes a covering portion disposed on the connecting surface. The edge contour of the outer diameter surface is covered by the covering portion of the optical reflecting element embedded carrier corresponding to an observation along a direction parallel to the normal axis. When a height difference between the optical effective surface and one surface of the covering portion along the direction parallel to the normal axis is $\Delta H$, the following condition is satisfied: $-0.15 \, mm \leq \Delta H \leq 0.005 \, mm$. Therefore, it is favorable for obtaining the compactness of the imaging lens assembly by folding the light path via the optical reflecting element.

The optical reflecting element embedded carrier can further include a relative portion disposed between the outer diameter surface and the relative surface, and the covering portion and the relative portion are overlapped along the direction parallel to the normal axis. Therefore, the optical reflecting element embedded carrier can position the optical reflecting element by the covering portion and the relative portion, so that it is favorable for reducing the assembling error between the optical reflecting element and the optical reflecting element embedded carrier.

The optical reflecting element embedded carrier can further include a relative portion disposed between the outer diameter surface and the relative surface, and the covering portion and the relative portion are not overlapped along the direction parallel to the normal axis. Therefore, it is favorable for improving the mold design margin by offsetting the arrangement between the covering portion and the relative portion of the optical reflecting element embedded carrier.

The optical effective surface of the optical reflecting element has a surface accuracy PV with a detection wavelength $\lambda$, an included angle $\theta'$ is between the incident light path and the normal axis, and the following conditions are satisfied: PV < $\lambda/5$; and 0 degrees < $\theta'$ < 90 degrees. Therefore, it is favorable for ensuring the image after reflection without distortion so as to enhance the image quality by arranging better range of the surface accuracy.

When the height difference between the optical effective surface and the surface of the covering portion along the direction parallel to the normal axis is $\Delta H$, the following condition is satisfied: -0.1 mm $\leq \Delta H \leq$ 0.003 mm. Therefore, the optical effective surface will not protrude from the surface of the covering portion of the optical reflecting element embedded carrier, so that it is favorable for ensuring that the optical effective surface will not be crushed by the mold so as to increase the yield of products.

The present disclosure provides an imaging lens assembly, which includes an optical reflecting element and an optical reflecting element embedded carrier. The optical reflecting element has a normal axis, the optical reflecting element is for folding an incident light path into an exiting light path symmetrically relative to the normal axis. The optical reflecting element includes an optical effective surface, a relative surface, an outer diameter surface and a connecting surface. The normal axis passes through the optical effective surface perpendicularly, wherein an area passed through by the normal axis is defined as an optical effective area. The relative surface is disposed relatively to the optical effective surface. The outer diameter surface surrounds the optical effective surface and defines an edge contour, and the edge contour defines a maximum contour area. The connecting surface connects the optical effective surface and the outer diameter surface. The optical reflecting element embedded carrier is for fixing the optical reflecting element, and the optical reflecting element is embedded thereinto, wherein the optical reflecting element and the optical reflecting element embedded carrier are integrally formed by insert molding. The optical effective surface is planar. The optical reflecting element embedded carrier includes a covering portion disposed on the connecting surface. The edge contour of the outer diameter surface is covered by the covering portion of the optical reflecting element embedded carrier corresponding to an observation along a direction parallel to the normal axis. The optical reflecting element embedded carrier further includes a stepping structure, the stepping structure includes a stepping surface, and the stepping structure is disposed adjacent to the optical effective surface. When a height difference between the stepping surface and one surface of the covering portion along the direction parallel to the normal axis is $\Delta E$, the following condition is satisfied: -0.25 mm $\leq \Delta E \leq$ 0.25 mm. Therefore, it is favorable for obtaining the compactness of the imaging lens assembly by folding the light path via the optical reflecting element.

Specifically, the stepping surface of the stepping structure can be the position in the mold for pushing the molded object, but the present disclosure will not be limited thereto. Along the direction parallel to the normal axis, when the stepping surface is higher than the surface of the covering portion, $\Delta E$ can be defined as a positive value; along the direction parallel to the normal axis, when the stepping surface is lower than the surface of the covering portion, $\Delta E$ can be defined as a negative value.

The optical reflecting element embedded carrier can further include a relative portion disposed between the outer diameter surface and the relative surface, and the covering portion and the relative portion are overlapped along the direction parallel to the normal axis. Therefore, the optical reflecting element embedded carrier can position the optical reflecting element by the covering portion and the relative portion, so that it is favorable for reducing the assembling error between the optical reflecting element and the optical reflecting element embedded carrier.

The optical reflecting element embedded carrier can further include a relative portion disposed between the outer diameter surface and the relative surface, and the covering portion and the relative portion are not overlapped along the direction parallel to the normal axis. Therefore, it is favorable for improving the mold design margin by offsetting the arrangement between the covering portion and the relative portion of the optical reflecting element embedded carrier.

The optical effective surface of the optical reflecting element has a surface accuracy PV with a detection wavelength $\lambda$, an included angle $\theta'$ is between the incident light path and the normal axis, and the following conditions are satisfied: PV < $\lambda/5$; and 0 degrees < $\theta'$ < 90 degrees. Therefore, it is favorable for ensuring the image after reflection without distortion so as to enhance the image quality by arranging better range of the surface accuracy.

Further, when the height difference between the stepping surface and the surface of the covering portion along the direction parallel to the normal axis is $\Delta E$, the following condition is satisfied: -0.2 mm $\leq \Delta E \leq$ 0.2 mm.

According to the above description of the present disclosure, the following specific embodiments and examples are provided for further explanation.

<1st Embodiment>

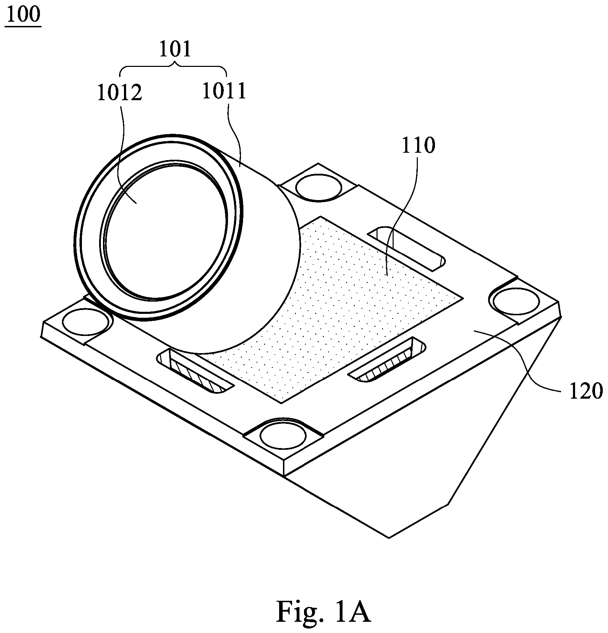

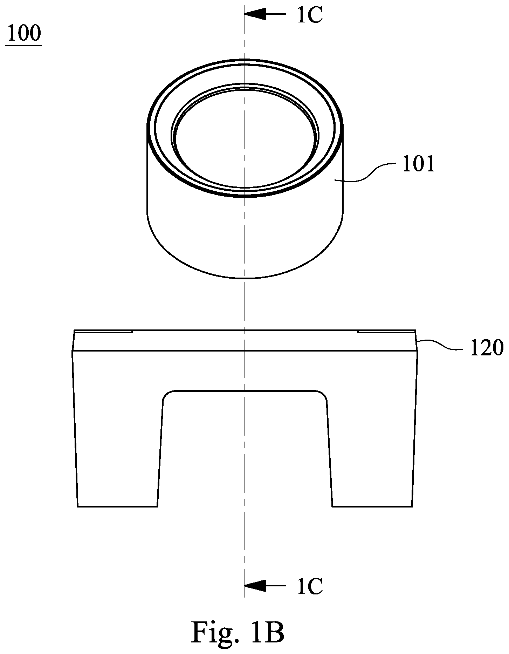

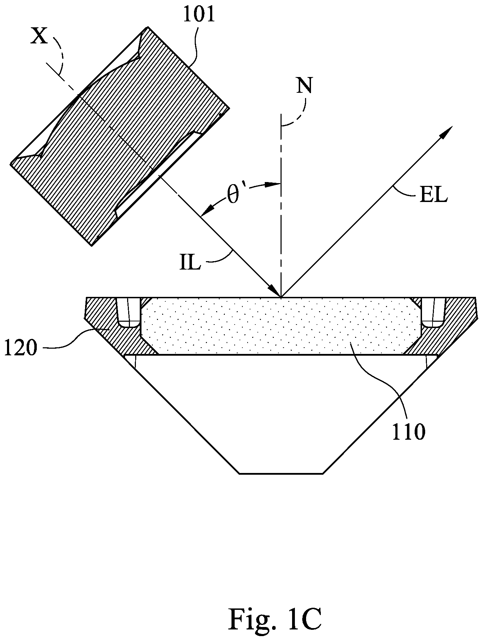

Fig. 1A is a schematic view of an imaging lens assembly 100 according to the 1st example of the 1st embodiment of the present disclosure. Fig. 1B is a side view of the imaging lens assembly 100 according to the 1st example of the 1st embodiment of Fig. 1A. Fig. 1C is a cross-sectional view along Line 1C-1C of Fig. 1B. In Fig. 1A to Fig. 1C, the imaging lens assembly 100 includes a barrel assembly 101, an optical reflecting element 110 and an optical reflecting element embedded carrier 120. The optical reflecting element embedded carrier 120 is for fixing the optical reflecting element 110, and the optical reflecting element 110 is embedded thereinto. The barrel assembly 101 is disposed on an object side of the optical reflecting element 110 and the optical reflecting element embedded carrier 120. The optical reflecting element 110 has a normal axis N, the optical reflecting element 110 is for folding an incident light path IL into an exiting light path EL symmetrically relative to the normal axis N. The optical reflecting element embedded carrier 120 is for fixing the optical reflecting element 110, and the optical reflecting element 110 is embedded thereinto, wherein the optical reflecting element 110 and the optical reflecting element embedded carrier 120 are integrally formed by insert molding. Further, the barrel assembly 101 can also be disposed on an image side of the optical reflecting element 110 and the optical reflecting element embedded carrier 120, but the embodiments or the examples of the present disclosure will not be limited thereto. Moreover, the imaging lens assembly 100 has an optical axis X, the optical axis X and the incident light path IL are parallel to each other, but the present disclosure will not be limited thereto.

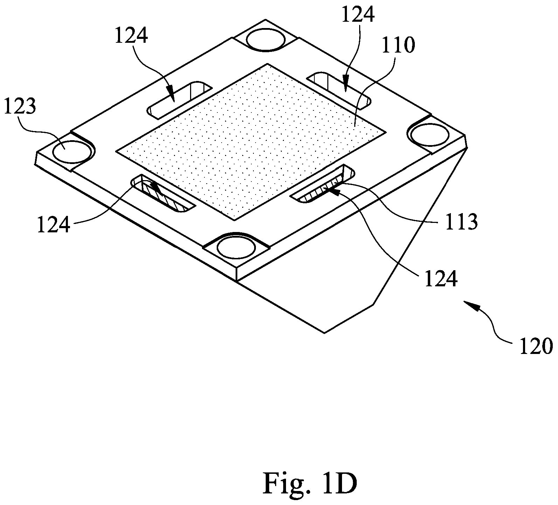

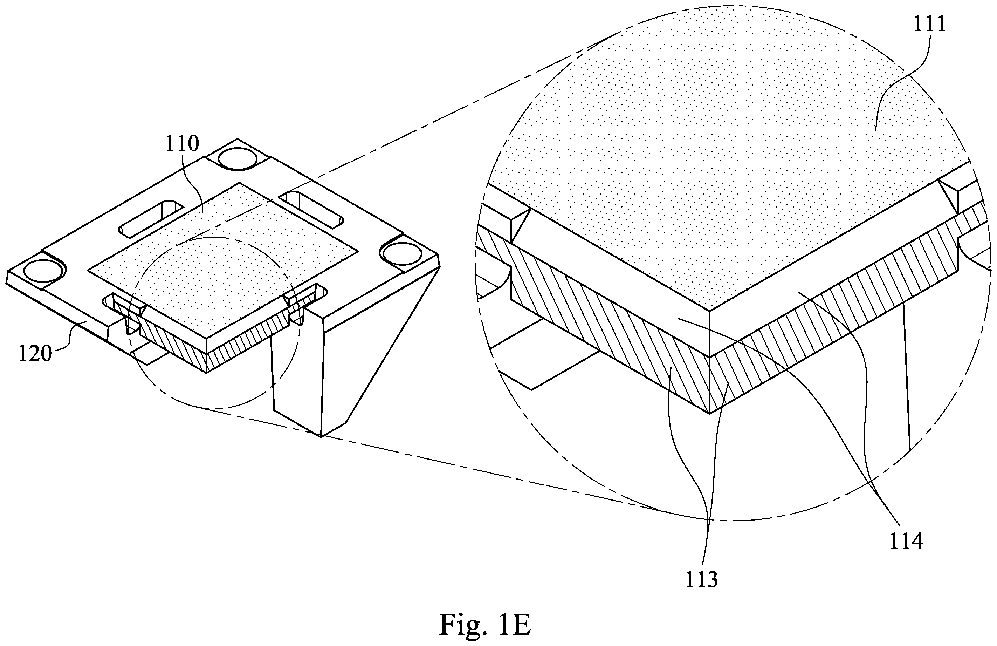

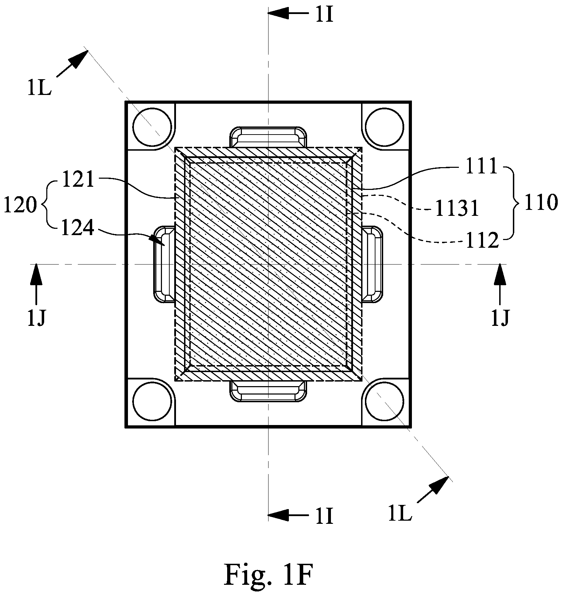

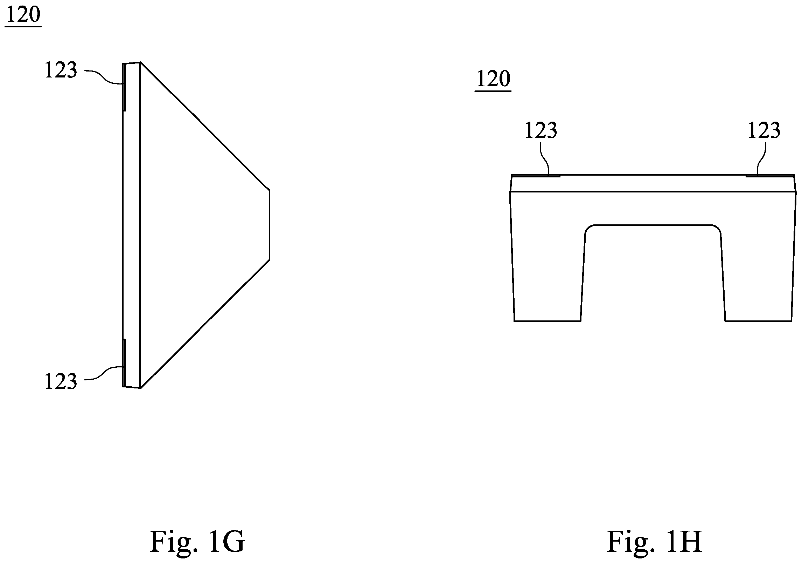

Fig. 1D is a schematic view of the optical reflecting element 110 and the optical reflecting element embedded carrier 120 of the imaging lens assembly 100 according to the 1st example of the 1st embodiment of Fig. 1A. Fig. 1E is a schematic view of an optical effective surface 111, a connecting surface 114 and an outer diameter surface 113 of the optical reflecting element 110 of Fig. 1D. Fig. 1F is a plane view of the optical reflecting element 110 and the optical reflecting element embedded carrier 120 of Fig. 1D. Fig. 1G is a side view of the optical reflecting element embedded carrier 120 of Fig. 1D. Fig. 1H is another side view of the optical reflecting element embedded carrier 120 of Fig. 1D. In Fig. 1A to Fig. 1H, the optical reflecting element 110 includes the optical effective surface 111, a relative surface 112, the outer diameter surface 113 and the connecting surface 114. The normal axis N passes through the optical effective surface 111 perpendicularly, wherein an area passed through by the normal axis N is defined as an optical effective area, wherein the optical reflecting element 111 is planar. The relative surface 112 is disposed relatively to the optical effective surface 111. The outer diameter surface 113 surrounds the optical effective surface 111 and defines an edge contour 1131, and the edge contour 1131 defines a maximum contour area. The connecting surface 114 connects the optical effective surface 111 and the outer diameter surface 113.

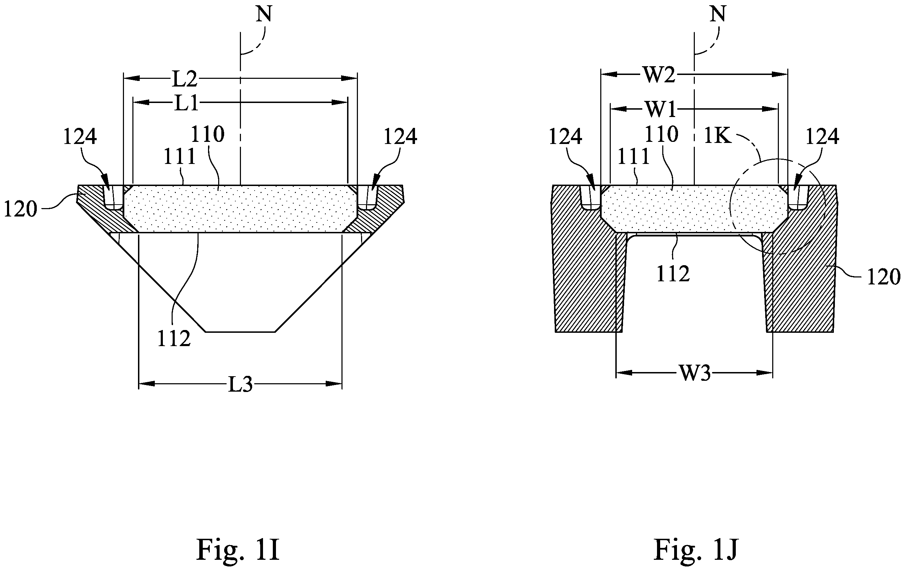

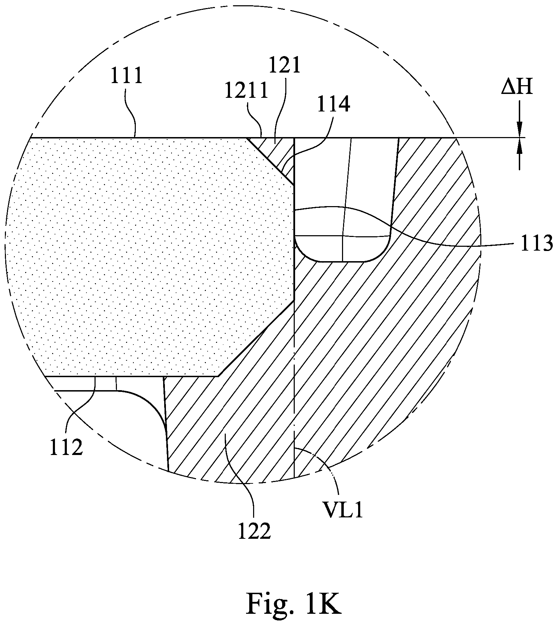

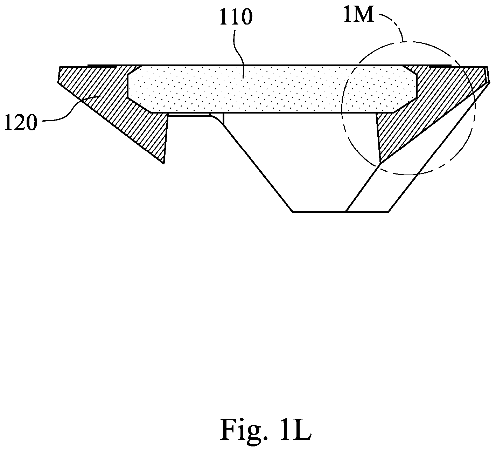

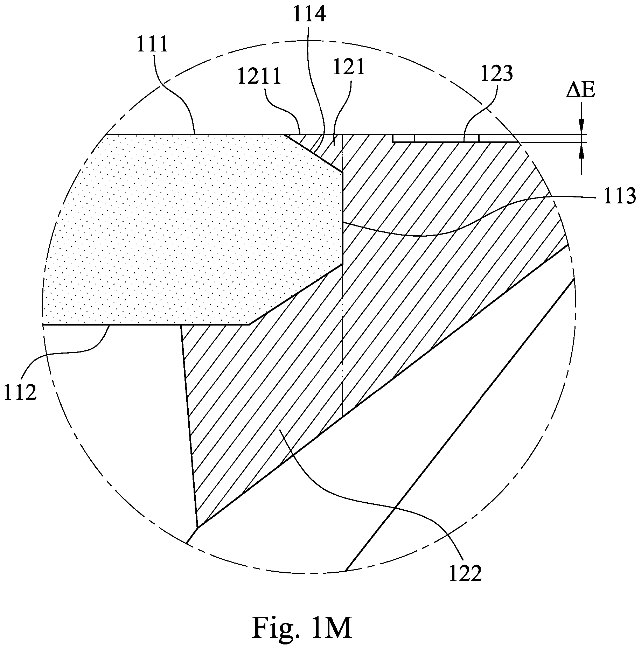

Fig. 1I is a cross-sectional view along Line 1I-1I of Fig. 1F. Fig. 1J is a cross-sectional view along Line 1J-1J of Fig. 1F. Fig. 1K is an enlarged view of the area 1K of Fig. 1J. Fig. 1L is a cross-sectional view along Line 1L-1L of Fig. 1F. Fig. 1M is an enlarged view of the area 1M of Fig. 1L. The optical reflecting element embedded carrier 120 includes a covering portion 121 and a relative portion 122, the covering portion 121 is disposed on the connecting surface 114, the relative portion 122 is disposed between the outer diameter surface 113 and the relative surface 112. The edge contour 1131 of the outer diameter surface 113 is covered by the covering portion 121 of the optical reflecting element embedded carrier 120 corresponding to an observation along a direction parallel to the normal axis N, and the covering portion 121 and the relative portion 122 are overlapped along the direction parallel to the normal axis N. In order to differentiate clearly between the relative portion 122 and another portion of the optical reflecting element embedded carrier 120, a virtual line VL1 in Fig. 1K is defined. The virtual line VL1 is extended along the direction parallel to the normal axis N from the outer diameter surface 113, the portion at the side of the virtual line VL1 towards the normal axis N is the relative portion 122, but the present disclosure will not be limited thereto, and the virtual line VL1 does not exist in the actual structure of the imaging lens assembly 100.

Further, the optical reflecting element embedded carrier 120 can further include a stepping structure (its reference numeral is omitted), the stepping structure includes a stepping surface 123, and the stepping structure is disposed adjacent to the optical effective surface 111. Specifically, in Fig. 1D, according to the 1st example of the 1st embodiment, a number of the stepping structures is four, which are located on four corners of one side of the optical reflecting element embedded carrier 120, respectively, and are at the same side of the optical effective surface 111, but the present disclosure will not be limited thereto.

In Fig. 1D, Fig. 1F, Fig. 1I and Fig. 1J, the optical reflecting element embedded carrier 120 can further include a positioning structure 124. According to the 1st example of the 1st embodiment, a number of the positioning structures 124 is four, which are arranged on the optical reflecting element embedded carrier 120 symmetrically, and are located on four edges of the side which is the same of the stepping surfaces 123, but the present disclosure will not be limited thereto. In detail, during the insert molding process, the optical reflecting element 110 can be positioned with a positioning structure (not shown in the drawings) of the mold and then the plastic insert molding can be proceeded so as to form the optical reflecting element embedded carrier 120 covering the optical reflecting element 110. After demolding, a hole left on the optical reflecting element embedded carrier 120 corresponding to the positioning structure of the mold is the positioning structure 124 of the optical reflecting element embedded carrier 120.

In Fig. 1I, Fig. 1J, Fig. 1K and Fig. 1M, when a length of the optical effective surface 111 is L1, a width of the optical effective surface 111 is W1, the optical effective area of the optical effective surface 111 is Ao (Ao = L1×W1), a length of the edge contour 1131 of the outer diameter surface 113 is L2, a width of the edge contour 1131 of the outer diameter surface 113 is W2, the maximum contour area of the outer diameter surface 113 is Ac (Ac = L2×W2), an angle of a range of the maximum contour area Ac covered by the covering portion 121 along a circumferential direction around the normal axis N is θ, a height difference between the optical effective surface 111 and one surface of the covering portion 121 along the direction parallel to the normal axis N is ΔH, and a height difference between the stepping surface 123 and one surface 1211 of the covering portion 121 along the direction parallel to the normal axis N is ΔE, the values in the following Table 1A are satisfied.

| Table 1A, 1st example of 1st embodiment | | | | |
|---|---|---|---|---|
| Ao (mm²) | Ac (mm²) | θ (deg.) | ΔH (mm) | ΔE (mm) |
| 99 | 120.05 | 360 | 0 | -0.11 |

Moreover, in Fig. 1I and Fig. 1J, a length of the relative surface 112 being L3 and a width of the relative surface 112 being W3 are labelled, which represent the range of the relative surface 112, the values thereof are not the technical points in the present disclosure, and will not be described herein.

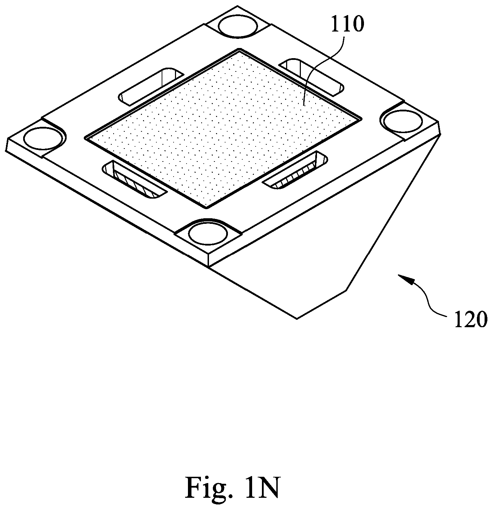

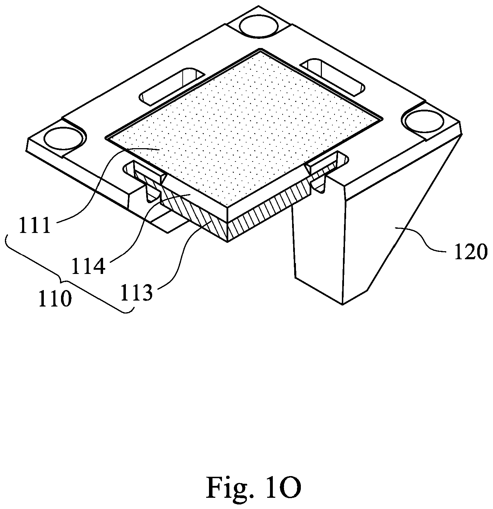

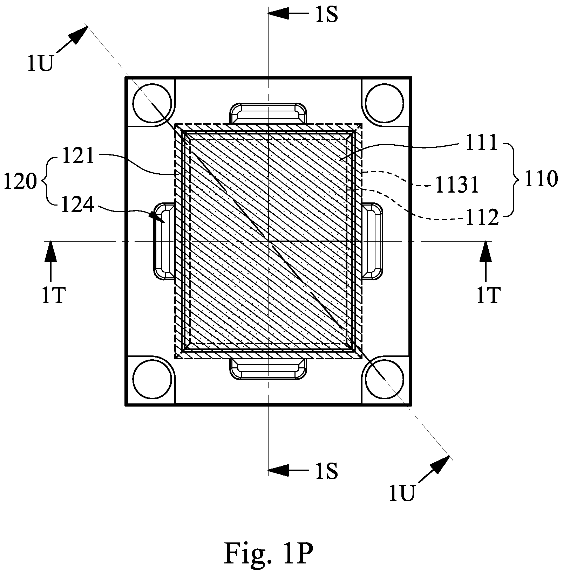

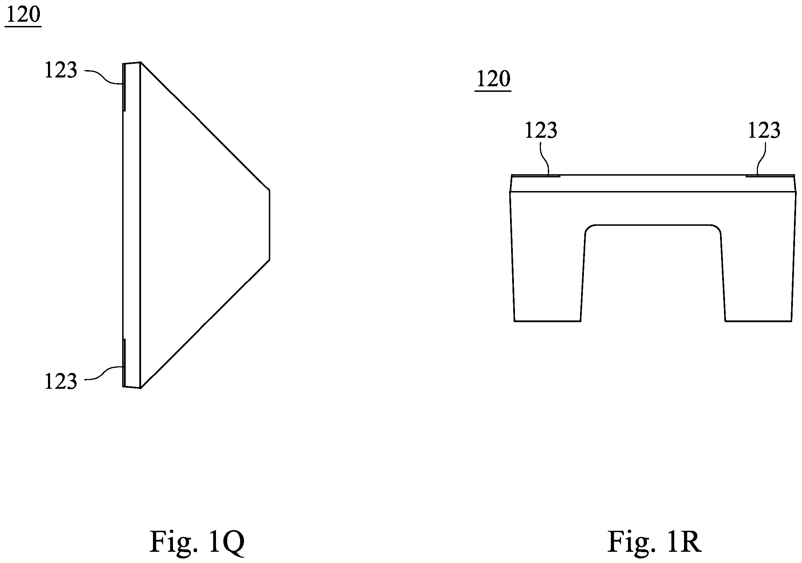

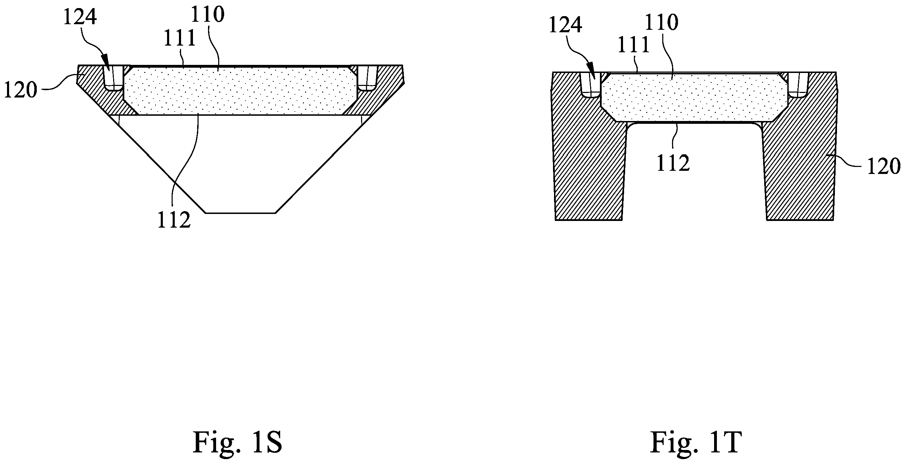

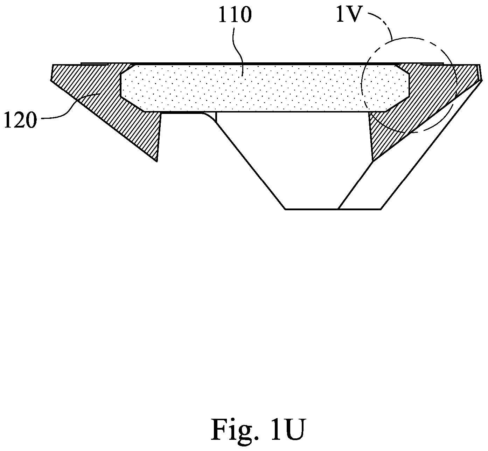

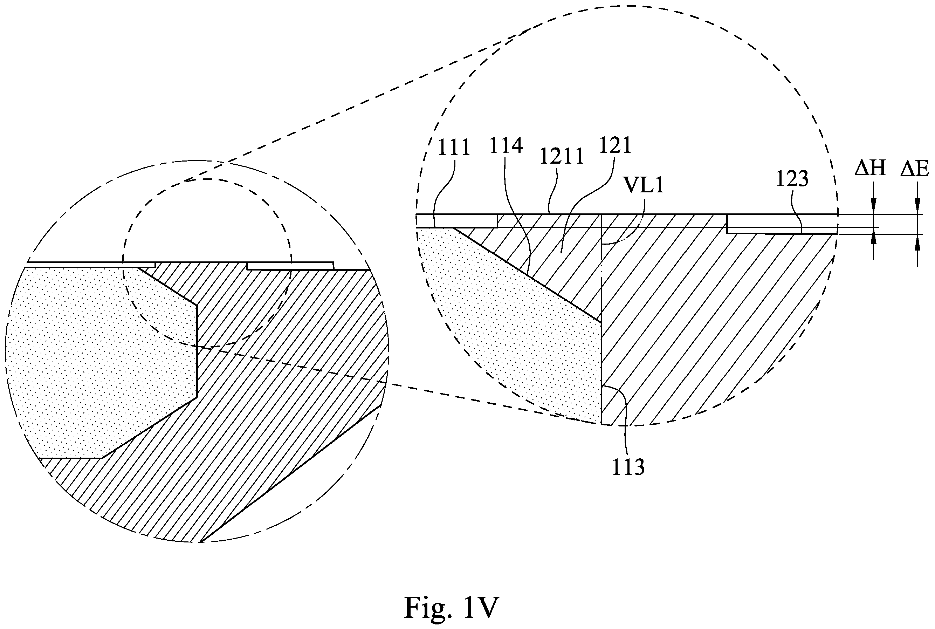

Fig. 1N is a schematic view of an optical reflecting element 110 and an optical reflecting element embedded carrier 120 of the imaging lens assembly 100 according to the 2nd example of the 1st embodiment of the present disclosure. Fig. 1O is a schematic view of an optical effective surface 111, a connecting surface 114 and an outer diameter surface 113 of the optical reflecting element 110 of Fig. 1N. Fig. 1P is a plane view of the optical reflecting element 110 and the optical reflecting element embedded carrier 120 of Fig. 1N. Fig. 1Q is a side view of the optical reflecting element embedded carrier 120 of Fig. 1N. Fig. 1R is another side view of the optical reflecting element embedded carrier 120 of Fig. 1N. Fig. 1S is a cross-sectional view along Line 1S-1S of Fig. 1P. Fig. 1T is a cross-sectional view along Line 1T-1T of Fig. 1P. Fig. 1U is a cross-sectional view along Line 1U-1U of Fig. 1P. Fig. 1V is an enlarged view of the area 1V of Fig. 1U. In Fig. 1N to Fig. 1V, the difference between the optical reflecting element 110 and the optical reflecting element embedded carrier 120 of the imaging lens assembly 100 according to the 2nd example of the 1st embodiment and the optical reflecting element 110 and the optical reflecting element embedded carrier 120 of the imaging lens assembly 100 according to the 1st example of the 1st embodiment is, the optical effective surface 111 of the optical reflecting element 110 is lower than the surface 1211 of the covering portion 121 on the optical reflecting element embedded carrier 120. In detail, a virtual line VL1 in Fig. 1V is defined. The virtual line VL1 is extended along the direction parallel to the normal axis N from the outer diameter surface 113, the portion at the side of the virtual line VL1 towards the normal axis N is the covering portion 121, but the present disclosure will not be limited thereto, and the virtual line VL1 does not exist in the actual structure of the imaging lens assembly 100. In the 2nd example of the 1st embodiment, other elements and the structure relationships are the same with or similar to the 1st example of the 1st embodiment, and will not be described again herein.

According to the 2nd example of the 1st embodiment, the definitions of parameters Ao, Ac, θ, ΔH and ΔE are the same with the 1st example of the 1st embodiment, and the values in the following Table 1B are satisfied.

| Table 1B, 2nd example of 1st embodiment | | | | |
|---|---|---|---|---|
| Ao (mm²) | Ac (mm²) | θ (deg.) | ΔH (mm) | ΔE (mm) |
| 99 | 120.05 | 360 | -0.07 | -0.11 |

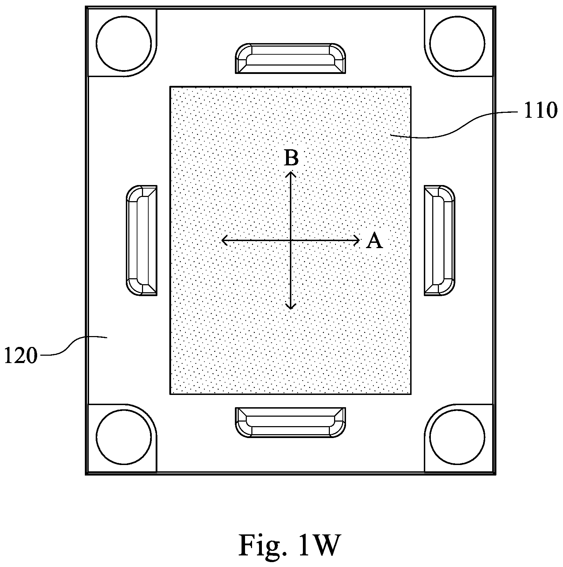

Fig. 1W is a schematic view of measuring directions of surface accuracies of the 1st and the 2nd examples of the 1st embodiment of Fig. 1A. In Fig. 1C, Fig. 1F, Fig. 1P and Fig. 1W, the optical effective surface 111 of the optical reflecting element 110 has a surface accuracy PV with a detection wavelength λ, an included angle θ' is between the incident light path IL and the normal axis N, wherein the included angle θ' is 45 degrees, the detection wavelength λ is 625 nm, and the values of each surface accuracy PV are listed in Table 1C as below.

| Table 1C, 1st example and 2nd example of 1st embodiment | | | | | | |
|---|---|---|---|---|---|---|
| Measurement machine: ZYGO GPI XPS | PV (μm) | | | | | |
| | 1st measuring location | | 2nd measuring location | | 3rd measuring location | |
| | Direction A | Direction B | Direction A | Direction B | Direction A | Direction B |
| | 0.061 | 0.089 | 0.072 | 0.062 | 0.071 | 0.109 |

<2nd Embodiment>

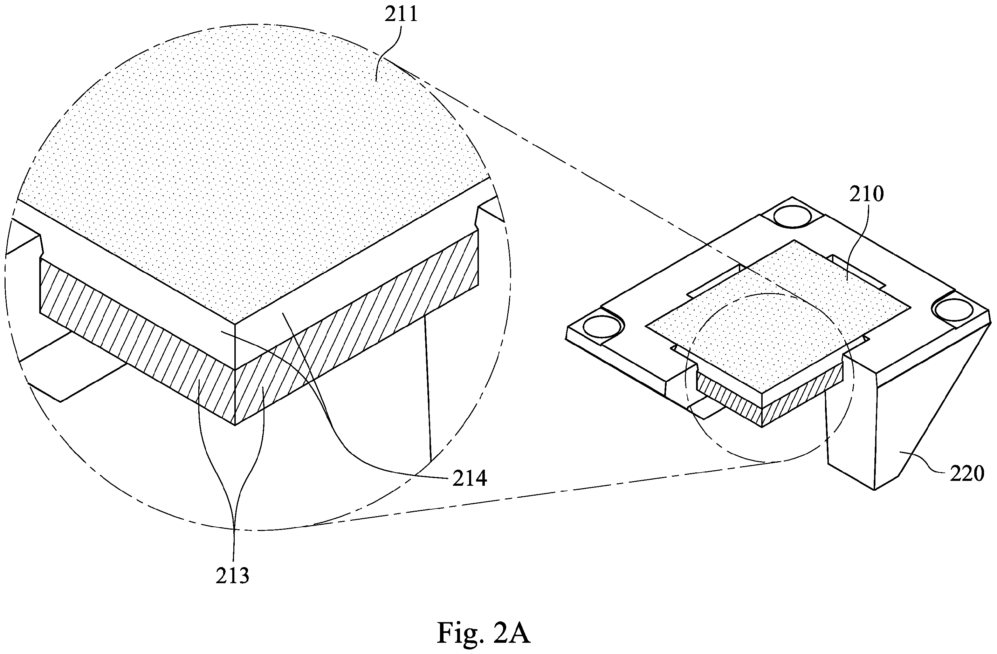

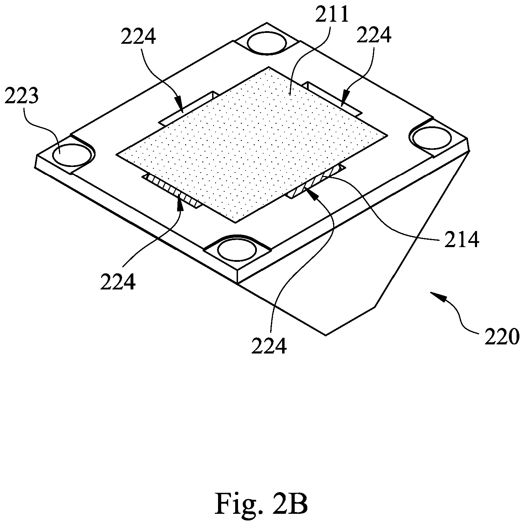

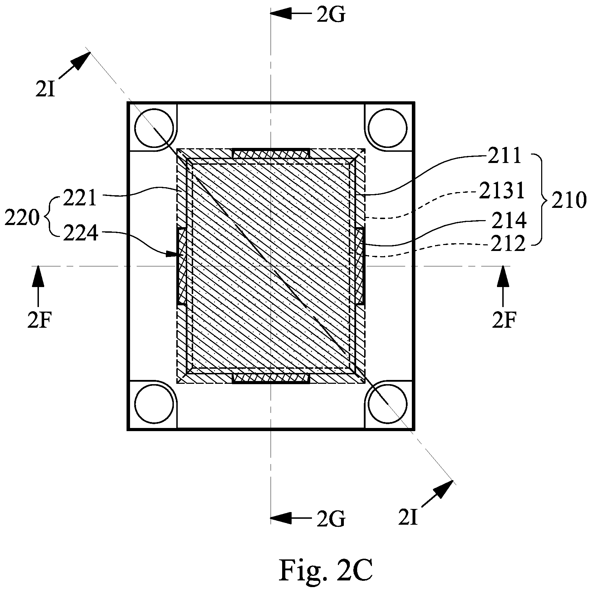

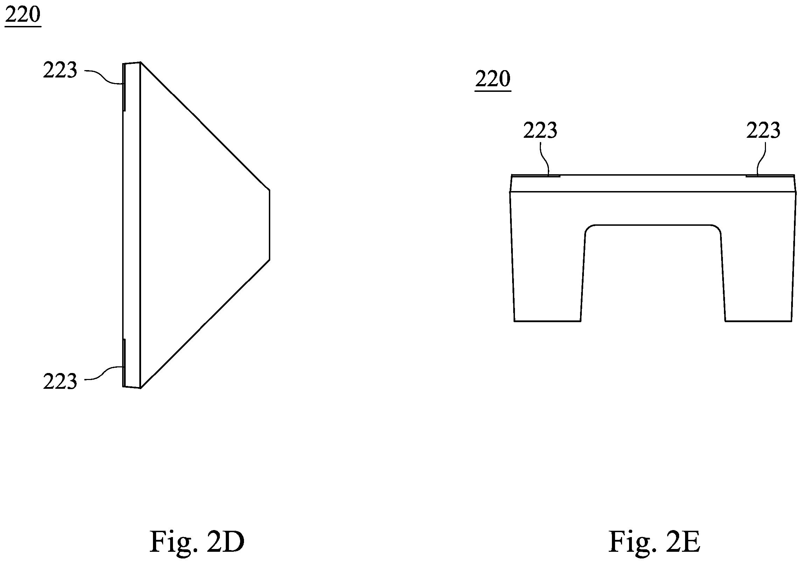

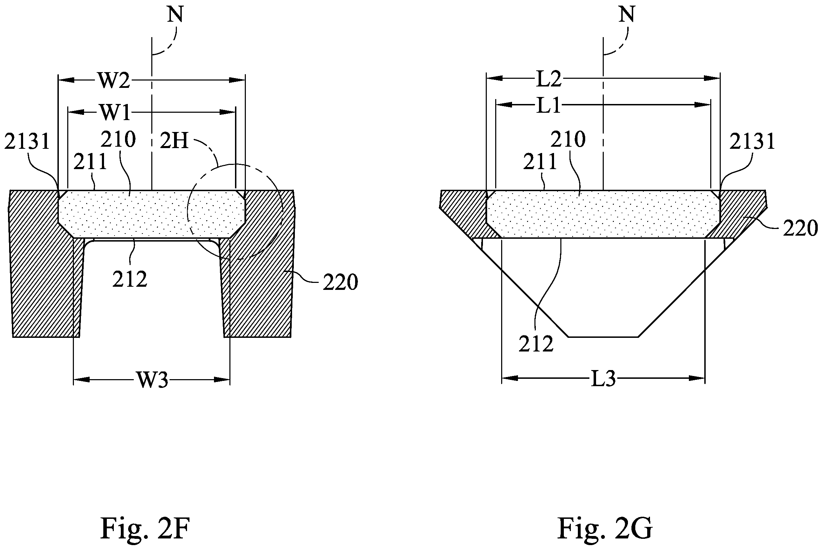

Fig. 2A is a schematic view of an optical reflecting element 210 and an optical reflecting element embedded carrier 220 of the imaging lens assembly (its reference numeral is omitted) according to the 1st example of the 2nd embodiment of the present disclosure. Fig. 2B is another schematic view of the optical reflecting element 210 and the optical reflecting element embedded carrier 220 of Fig. 2A. Fig. 2C is a plane view of the optical reflecting element 210 and the optical reflecting element embedded carrier 220 of Fig. 2A. Fig. 2D is a side view of the optical reflecting element embedded carrier 220 of Fig. 2A. Fig. 2E is another side view of the optical reflecting element embedded carrier 220 of Fig. 2A. According to the 1st example of the 2nd embodiment in Fig. 2A to Fig. 2E, the imaging lens assembly includes a barrel assembly (its reference numeral is omitted), an optical reflecting element 210 and an optical reflecting element embedded carrier 220, wherein the optical reflecting element 210 has a normal axis N (labeled in Fig. 2F), the optical reflecting element 210 is for folding an incident light path into an exiting light path symmetrically relative to the normal axis N. The optical reflecting element embedded carrier 220 is for fixing the optical reflecting element 210, and the optical reflecting element 210 is embedded thereinto, wherein the optical reflecting element 210 and the optical reflecting element embedded carrier 220 are integrally formed by insert molding. Further, the structure relationships, the arrangements and the details between the barrel assembly and each of the optical reflecting element 210 and the optical reflecting element embedded carrier 220 are the same with or similar to the aforementioned 1st embodiment, and will not be described again herein.

Fig. 2F is a cross-sectional view along Line 2F-2F of Fig. 2C. Fig. 2G is a cross-sectional view along Line 2G-2G of Fig. 2C. In Fig. 2A to Fig. 2C and Fig. 2F to Fig. 2G, the optical reflecting element 210 includes the optical effective surface 211, a relative surface 212, the outer diameter surface 213 and the connecting surface 214. The normal axis N passes through the optical effective surface 211 perpendicularly, wherein an area passed through by the normal axis N is defined as an optical effective area, wherein the optical reflecting element 211 is planar. The relative surface 212 is disposed relatively to the optical effective surface 211. The outer diameter surface 213 surrounds the optical effective surface 211 and defines an edge contour 2131, and the edge contour 2131 defines a maximum contour area. The connecting surface 214 connects the optical effective surface 211 and the outer diameter surface 213.

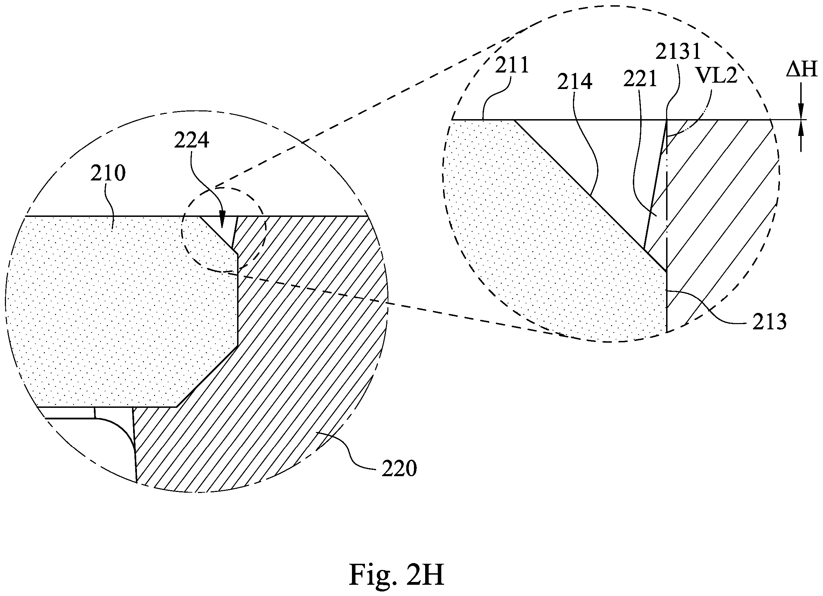

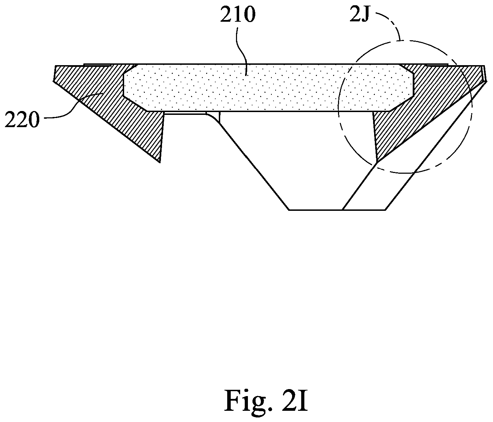

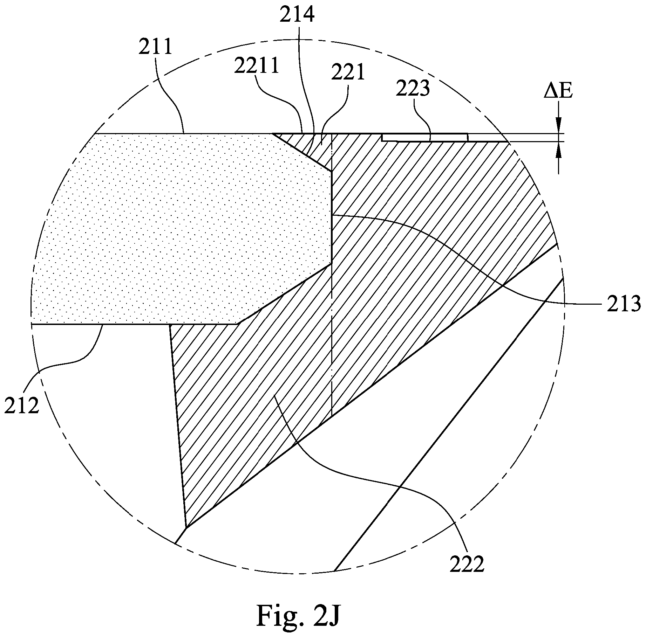

Fig. 2H is an enlarged view of the area 2H of Fig. 2F. Fig. 2I is a cross-sectional view along Line 21-21 of Fig. 2C. Fig. 2J is an enlarged view of the area 2J of Fig. 2I. The optical reflecting element embedded carrier 220 includes a covering portion 221 and a relative portion 222, the covering portion 221 is disposed on the connecting surface 214, the relative portion 222 is disposed between the outer diameter surface 213 and the relative surface 212. The edge contour 2131 of the outer diameter surface 213 is covered by the covering portion 221 of the optical reflecting element embedded carrier 220 corresponding to an observation along a direction parallel to the normal axis N, and the covering portion 221 and the relative portion 222 are overlapped along the direction parallel to the normal axis N. In detail, a virtual line VL2 in Fig. 2H is defined. The virtual line VL2 is extended along the direction parallel to the normal axis N from the outer diameter surface 213, the portion at the side of the virtual line VL2 towards the normal axis N is the covering portion 221, but the present disclosure will not be limited thereto, and the virtual line VL2 does not exist in the actual structure.

Further, in Fig. 2B, Fig. 2D and Fig. 2E, the optical reflecting element embedded carrier 220 can further include a stepping structure (its reference numeral is omitted), the stepping structure includes a stepping surface 223, and the stepping structure is disposed adjacent to the optical effective surface 211. Specifically, in Fig. 2B, according to the 1st example of the 2nd embodiment, a number of the stepping structures is four, which are located on four corners of one side of the optical reflecting element embedded carrier 220, respectively, and are at the same side of the optical effective surface 211, but the present disclosure will not be limited thereto.

In Fig. 2B, Fig. 2C and Fig. 2H, the optical reflecting element embedded carrier 220 can further include a positioning structure 224. According to the 1st example of the 2nd embodiment, a number of the positioning structures 224 is four, which are arranged on the optical reflecting element embedded carrier 220 symmetrically, and are located on four edges of the side which is the same of the stepping surfaces 223, but the present disclosure will not be limited thereto. In detail, during the insert molding process, the optical reflecting element 210 can be positioned with a positioning structure (not shown in the drawings) of the mold and then the plastic insert molding can be proceeded so as to form the optical reflecting element embedded carrier 220 covering the optical reflecting element 210. After demolding, a hole left on the optical reflecting element embedded carrier 220 corresponding to the positioning structure of the mold is the positioning structure 224 of the optical reflecting element embedded carrier 220.

In Fig. 2F, Fig. 2G, Fig. 2H and Fig. 2J, when a length of the optical effective surface 211 is L1, a width of the optical effective surface 211 is W1, the optical effective area of the optical effective surface 211 is Ao (Ao = L1×W1), a length of the edge contour 2131 of the outer diameter surface 213 is L2, a width of the edge contour 2131 of the outer diameter surface 213 is W2, the maximum contour area of the outer diameter surface 213 is Ac (Ac = L2×W2), an angle of a range of the maximum contour area Ac covered by the covering portion 221 along a circumferential direction around the normal axis N is θ, a height difference between the optical effective surface 211 and one surface of the covering portion 221 along the direction parallel to the normal axis N is ΔH, and a height difference between the stepping surface 223 and one surface 2211 of the covering portion 221 along the direction parallel to the normal axis N is $\Delta$E, the values in the following Table 2A are satisfied.

| Table 2A, 1st example of 2nd embodiment | | | | |
|---|---|---|---|---|
| Ao (mm$^2$) | Ac (mm$^2$) | $\theta$ (deg.) | $\Delta$H (mm) | $\Delta$E (mm) |
| 99 | 120.05 | 360 | 0 | -0.11 |

Moreover, in Fig. 2F and Fig. 2G, a length of the relative surface 212 being L3 and a width of the relative surface 212 being W3 are labelled, which represent the range of the relative surface 212, the values thereof are not the technical points in the present disclosure, and will not be described herein.

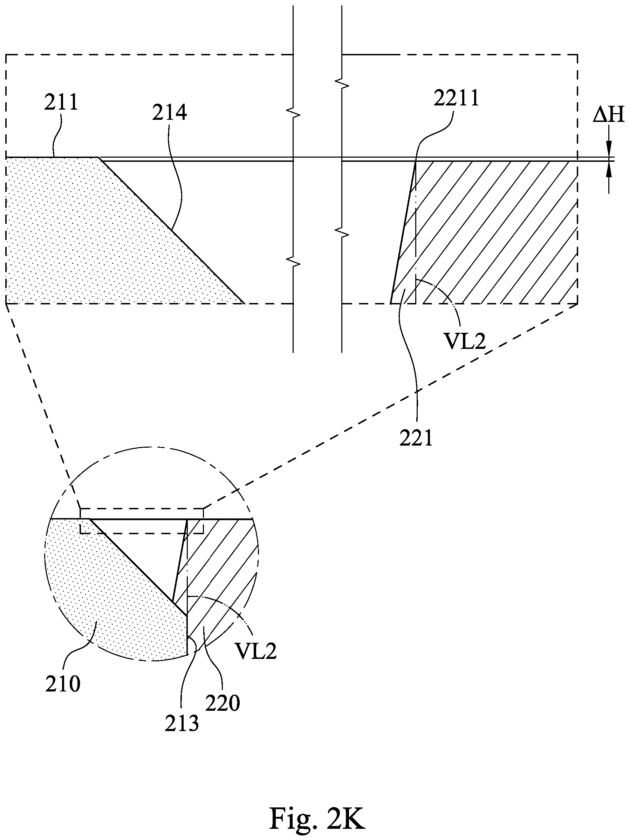

Fig. 2K is a schematic view of an optical reflecting element 210 and an optical reflecting element embedded carrier 220 of the imaging lens assembly according to the 2nd example of the 2nd embodiment of the present disclosure. In Fig. 2K, the difference between the optical reflecting element 210 and the optical reflecting element embedded carrier 220 of the imaging lens assembly according to the 2nd example of the 2nd embodiment and the optical reflecting element 210 and the optical reflecting element embedded carrier 220 of the imaging lens assembly according to the 1st example of the 2nd embodiment is, the optical effective surface 211 of the optical reflecting element 210 is higher than the surface 2211 of the covering portion 221 on the optical reflecting element embedded carrier 220. In detail, a virtual line VL2 in Fig. 2K is defined. The virtual line VL2 is extended along the direction parallel to the normal axis N from the outer diameter surface 213, the portion at the side of the virtual line VL2 towards the normal axis N is the covering portion 221, but the present disclosure will not be limited thereto, and the virtual line VL2 does not exist in the actual structure of the imaging lens assembly. In the 2nd example of the 2nd embodiment, other elements and the structure relationships are the same with or similar to the 1st example of the 2nd embodiment, and will not be described again herein.

According to the 2nd example of the 2nd embodiment, the definitions of parameters Ao, Ac, $\theta$, $\Delta$H and $\Delta$E are the same with the 1st example of the 2nd embodiment, and the values in the following Table 2B are satisfied.

| Table 2B, 2nd example of 2nd embodiment | | | | |
|---|---|---|---|---|
| Ao (mm$^2$) | Ac (mm$^2$) | $\theta$ (deg.) | $\Delta$H (mm) | $\Delta$E (mm) |
| 99 | 120.05 | 360 | 0.002 | -0.11 |

The values of each surface accuracy PV according to the 1st and the 2nd examples of the 2nd embodiment are listed in Table 2C as below, which can be defined as the surface accuracy PV in the 1st and the 2nd examples of the 1st embodiment, and will not be described again herein.

| Table 2C, 1st example and 2nd example of 2nd embodiment | | | | | |
|---|---|---|---|---|---|
| Measurement machine: ZYGO GPI XPS | PV ($\mu$m) | | | | |
| | 1st measuring location | | 2nd measuring location | | 3rd measuring location | |
| | Direction A | Direction B | Direction A | Direction B | Direction A | Direction B |
| | 0.066 | 0.078 | 0.079 | 0.054 | 0.055 | 0.078 |

<3rd Embodiment>

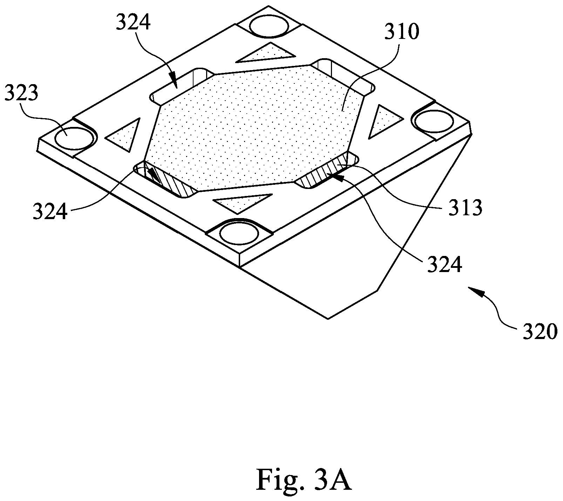

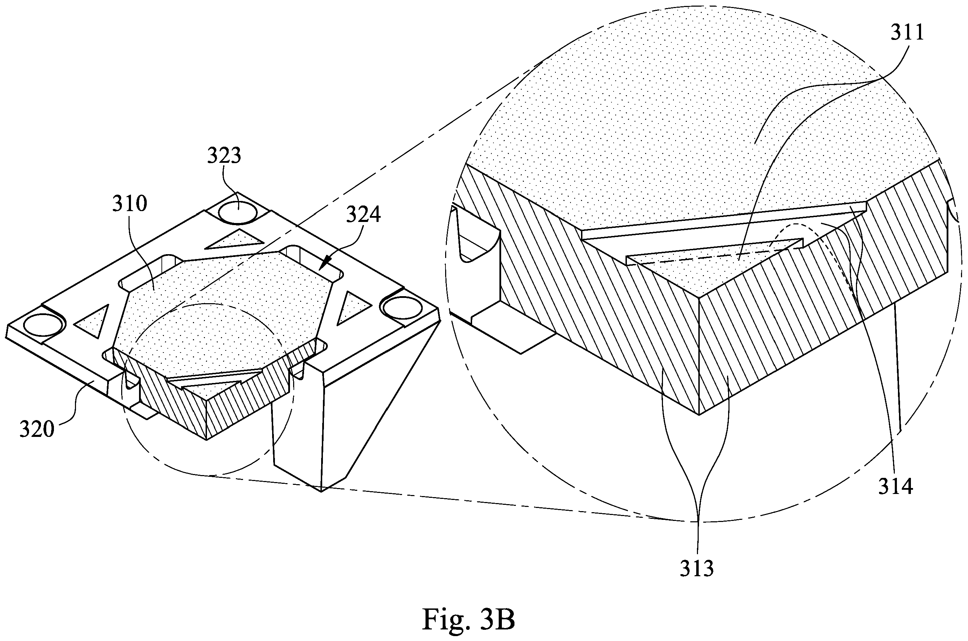

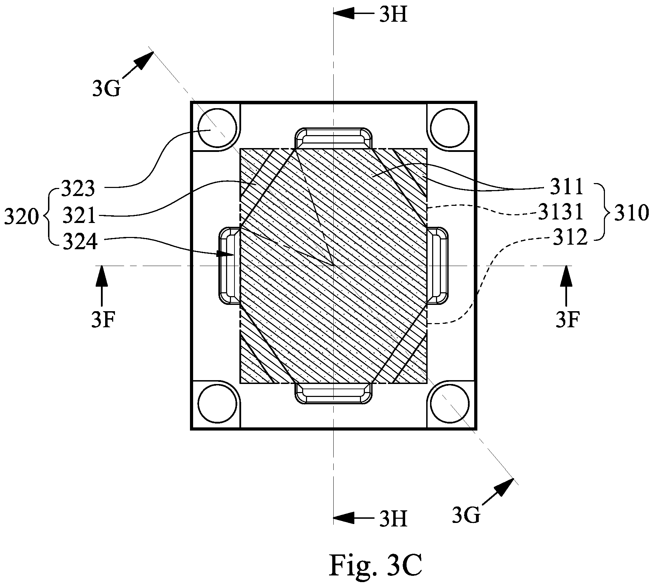

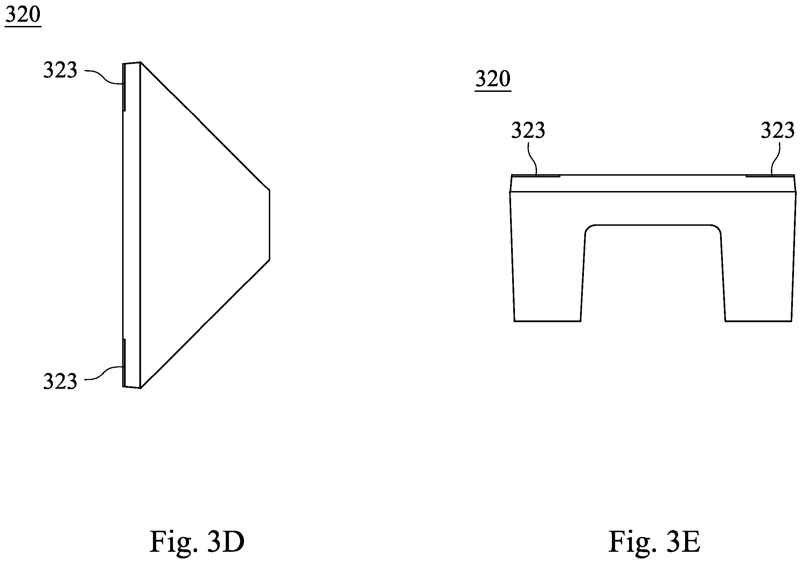

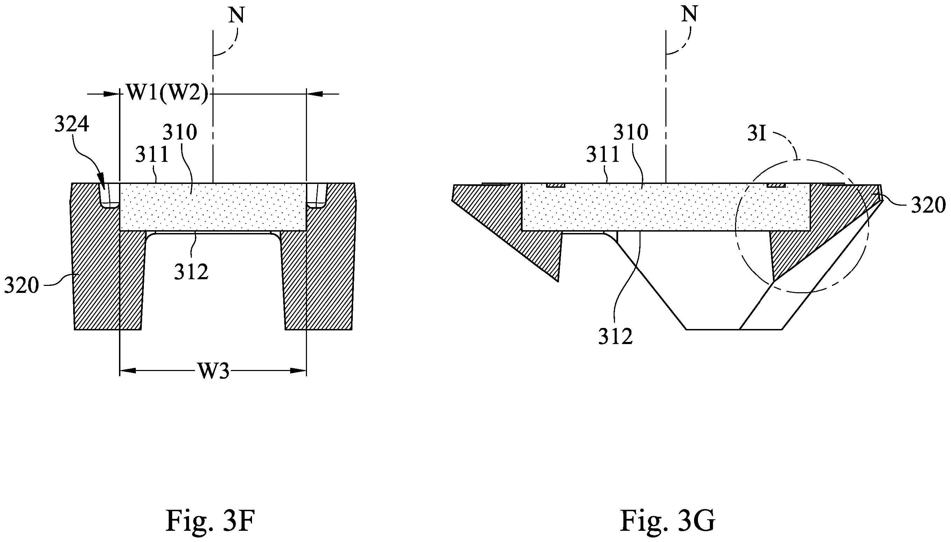

Fig. 3A is a schematic view of an optical reflecting element 310 and an optical reflecting element embedded carrier 320 of the imaging lens assembly (its reference numeral is omitted) according to the 1st example of the 3rd embodiment of the present disclosure. Fig. 3B is another schematic view of the optical reflecting element 310 and the optical reflecting element embedded carrier 320 of Fig. 3A. Fig. 3C is a plane view of the optical reflecting element 310 and the optical reflecting element embedded carrier 320 of Fig. 3A. Fig. 3D is a side view of the optical reflecting element embedded carrier 320 of Fig. 3A. Fig. 3E is another side view of the optical reflecting element embedded carrier 320 of Fig. 3A. According to the 1st example of the 3rd embodiment in Fig. 3A to Fig. 3E, the imaging lens assembly includes a barrel assembly (its reference numeral is omitted), an optical reflecting element 310 and an optical reflecting element embedded carrier 320, wherein the optical reflecting element 310 has a normal axis N (labeled in Fig. 3F), the optical reflecting element 310 is for folding an incident light path into an exiting light path symmetrically relative to the normal axis N. The optical reflecting element embedded carrier 320 is for fixing the optical reflecting element 310, and the optical reflecting element 310 is embedded thereinto, wherein the optical reflecting element 310 and the optical reflecting element embedded carrier 320 are integrally formed by insert molding. Further, the structure relationships, the arrangements and the details between the barrel assembly and each of the optical reflecting element 310 and the optical reflecting element embedded carrier 320 are the same with or similar to the aforementioned 1st embodiment, and will not be described again herein.

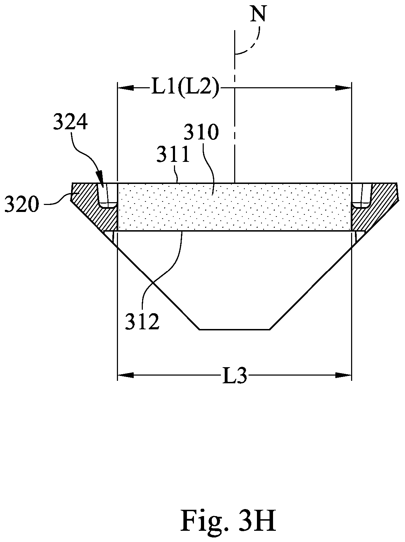

Fig. 3F is a cross-sectional view along Line 3F-3F of Fig. 3C. Fig. 3G is a cross-sectional view along Line 3G-3G of Fig. 3C. Fig. 3H is a cross-sectional view along Line 3H-3H of Fig. 3C. In Fig. 3F to Fig. 3H, the optical reflecting element 310 includes the optical effective surface 311, a relative surface 312, the outer diameter surface 313 and the connecting surface 314. The normal axis N passes through the optical effective surface 311 perpendicularly, wherein an area passed through by the normal axis N is defined as an optical effective area, wherein the optical reflecting element 311 is planar. The relative surface 312 is disposed relatively to the optical effective surface 311. The outer diameter surface 313 surrounds the optical effective surface 311 and defines an edge contour 3131, and the edge contour 3131 defines a maximum contour area. The connecting surface 314 connects the optical effective surface 311 and the outer diameter surface 313. It should be mentioned that, in Fig. 3B, the arrangement of the connecting surface 314 forms a concave structure on the optical effective surface 311 so as to connect the optical effective surface 311 and the outer diameter surface 313.

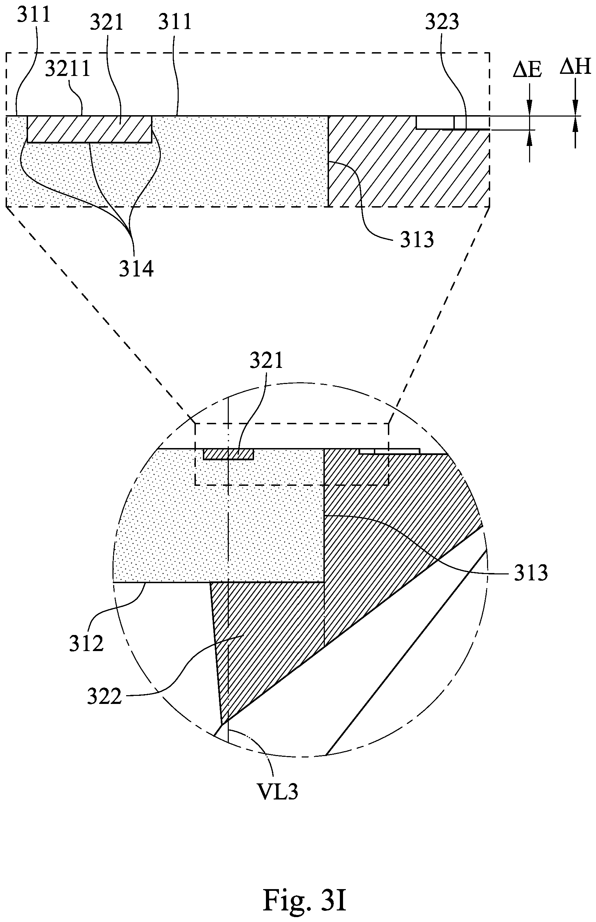

Fig. 3I is an enlarged view of the area 3I of Fig. 3G. In Fig. 3C, Fig. 3G and Fig. 3I, the optical reflecting element embedded carrier 320 includes a covering portion 321 and a relative portion 322, the covering portion 321 is disposed on the connecting surface 314, the relative portion 322 is disposed between the outer diameter surface 313 and the relative surface 312. The edge contour 3131 of the outer diameter surface 313 is covered by the covering portion 321 of the optical reflecting element embedded carrier 320 corresponding to an observation along a direction parallel to the normal axis N, and the covering portion 321 and the relative portion 322 are overlapped along the direction parallel to the normal axis N. In detail, a virtual line VL3 in Fig. 3I is defined. The virtual line VL3 is extended along the direction parallel to the normal axis N from the outer diameter surface 313, the portion at the side of the virtual line VL3 towards the normal axis N is the relative portion 322, so that the covering portion 321 and the relative portion 322 being overlapped along the direction parallel to the normal axis N can be determined. The present disclosure will not be limited thereto, and the virtual line VL3 does not exist in the actual structure.

Further, in Fig. 3A to Fig. 3E, the optical reflecting element embedded carrier 320 can further include a stepping structure (its reference numeral is omitted), the stepping structure includes a stepping surface 323, and the stepping structure is disposed adjacent to the optical effective surface 311. Specifically, in Fig. 3A, according to the 1st example of the 3rd embodiment, a number of the stepping structures is four, which are located on four corners of one side of the optical reflecting element embedded carrier 320, respectively, and are at the same side of the optical effective surface 311, but the present disclosure will not be limited thereto.

In Fig. 3A to Fig. 3C and Fig. 3F to Fig. 3H, the optical reflecting element embedded carrier 320 can further include a positioning structure 324. According to the 1st example of the 3rd embodiment, a number of the positioning structures 324 is four, which are arranged on the optical reflecting element embedded carrier 320 symmetrically, and are located on four edges of the side which is the same of the stepping surfaces 323, but the present disclosure will not be limited thereto. In detail, during the insert molding process, the optical reflecting element 310 can be positioned with a positioning structure (not shown in the drawings) of the mold and then the plastic insert molding can be proceeded so as to form the optical reflecting element embedded carrier 320 covering the optical reflecting element 310. After demolding, a hole left on the optical reflecting element embedded carrier 320 corresponding to the positioning structure of the mold is the positioning structure 324 of the optical reflecting element embedded carrier 320.

In Fig. 3C, Fig. 3F, Fig. 3H and Fig. 3I, when a length of the optical effective surface 311 is L1, a width of the optical effective surface 311 is W1, the optical effective area of the optical effective surface 311 is Ao (Ao = L1×W1), a length of the edge contour 3131 of the outer diameter surface 313 is L2, a width of the edge contour 3131 of the outer diameter surface 313 is W2, the maximum contour area of the outer diameter surface 313 is Ac (Ac = L2×W2), an angle of a range of the maximum contour area Ac covered by the covering portion 321 along a circumferential direction around the normal axis N is $\theta$, a height difference between the optical effective surface 311 and one surface of the covering portion 321 along the direction parallel to the normal axis N is $\Delta$H, and a height difference between the stepping surface 323 and one surface 3211 of the covering portion 321 along the direction parallel to the normal axis N is $\Delta$E, the values in the following Table 3A are satisfied.

| Table 3A, 1st example of 3rd embodiment | | | | |
|---|---|---|---|---|
| Ao (mm$^2$) | Ac (mm$^2$) | $\theta$ (deg.) | $\Delta$H (mm) | $\Delta$E (mm) |
| 105.34 | 120.05 | 198.8 | 0 | -0.11 |

Moreover, in Fig. 3F and Fig. 3H, a length of the relative surface 312 being L3 and a width of the relative surface 312 being W3 are labelled, which represent the range of the relative surface 312, the values thereof are not the technical points in the present disclosure, and will not be described herein.

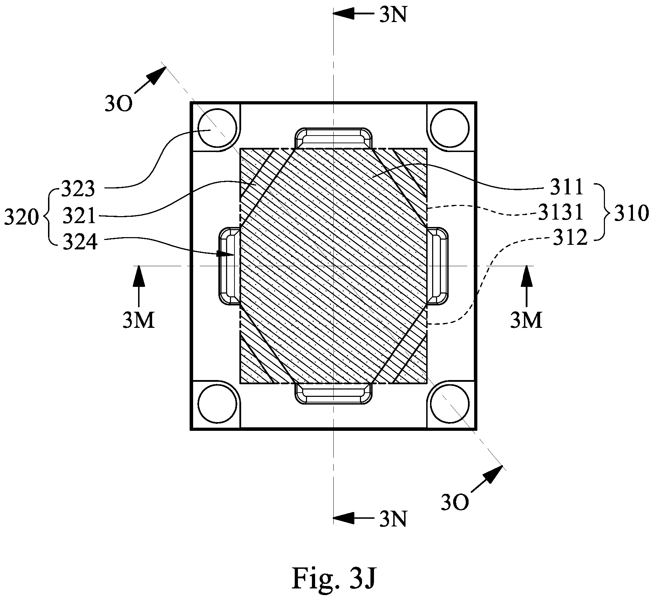

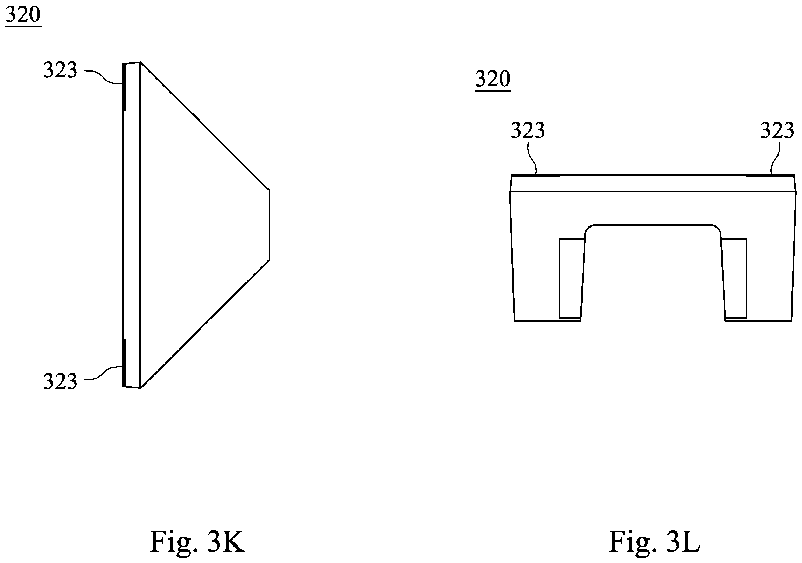

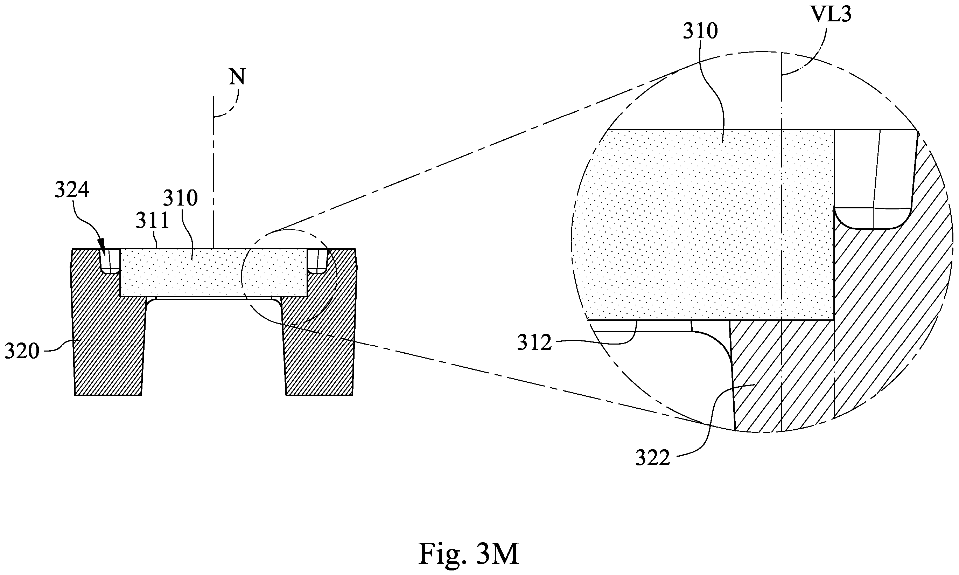

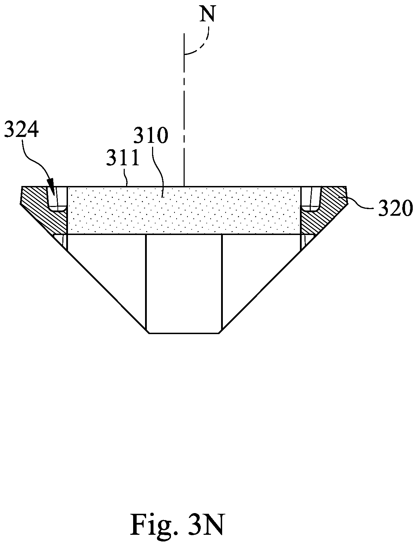

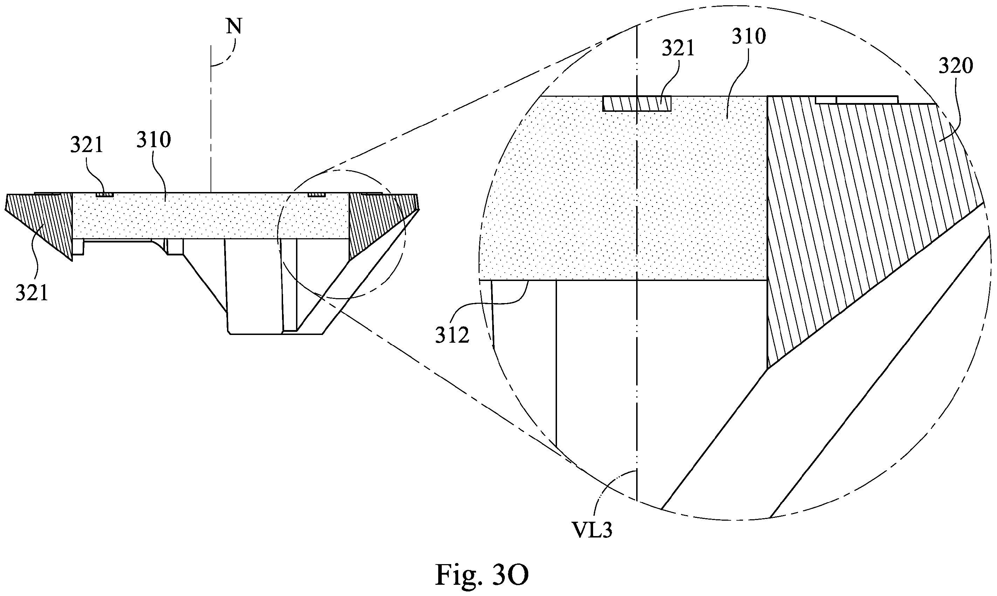

Fig. 3J is a schematic view of an optical reflecting element 310 and an optical reflecting element embedded carrier 320 of the imaging lens assembly according to the 2nd example of the 3rd embodiment of the present disclosure. Fig. 3K is a side view of the optical reflecting element embedded carrier 320 of Fig. 3J. Fig. 3L is another side view of the optical reflecting element embedded carrier 320 of Fig. 3J. Fig. 3M is a cross-sectional view along Line 3M-3M of Fig. 3J. Fig. 3N is a cross-sectional view along Line 3N-3N of Fig. 3J. Fig. 3O is a cross-sectional view along Line 3O-3O of Fig. 3J. In Fig. 3J to Fig. 3O, the difference between the optical reflecting element 310 and the optical reflecting element embedded carrier 320 of the imaging lens assembly according to the 2nd example of the 3rd embodiment and the optical reflecting element 310 and the optical reflecting element embedded carrier 320 of the imaging lens assembly according to the 1st example of the 3rd embodiment is, the covering portion 321 and the relative portion 322 are not overlapped along the direction parallel to the normal axis N. In detail, a virtual line VL3 in Fig. 3M is defined. The virtual line VL3 is extended along the direction parallel to the normal axis N from the relative portion 322 to the optical reflecting element 310, and the virtual line VL3 does not pass through the covering portion 321. Further, a virtual line VL3 in Fig. 3O is defined. The virtual line VL3 is extended along the direction parallel to the normal axis N from the covering portion 321 to the optical reflecting element 310, and the virtual line VL3 does not pass through the relative portion 322. That is, the covering portion 321 and the relative portion 322 are unaligned and not overlapped along the direction parallel to the normal axis N. The present disclosure will not be limited thereto, and the virtual line VL3 disclosed in Fig. 3M and Fig. 3O does not exist in the actual structure.

According to the 2nd example of the 3rd embodiment, the definitions of parameters Ao, Ac, $\theta$, $\Delta H$ and $\Delta E$ are the same with the 1st example of the 3rd embodiment, and the values in the following Table 3B are satisfied.

| Table 3B, 2nd example of 3rd embodiment | | | | |
|---|---|---|---|---|
| Ao (mm$^2$) | Ac (mm$^2$) | $\theta$ (deg.) | $\Delta H$ (mm) | $\Delta E$ (mm) |
| 105.34 | 120.05 | 198.8 | 0 | -0.11 |

The values of each surface accuracy PV according to the 1st and the 2nd examples of the 3rd embodiment are listed in Table 3C as below, which can be defined as the surface accuracy PV in the 1st and the 2nd examples of the 1st embodiment, and will not be described again herein.

| Table 3C, 1st example and 2nd example of 3rd embodiment | | | | | |
|---|---|---|---|---|---|
| Measurement machine: ZYGO GPI XPS | PV ($\mu$m) | | | | |
| | 1st measuring location | | 2nd measuring location | | 3rd measuring location | |
| | Direction A | Direction B | Direction A | Direction B | Direction A | Direction B |
| | 0.075 | 0.067 | 0.117 | 0.101 | 0.086 | 0.092 |

<4th Embodiment>

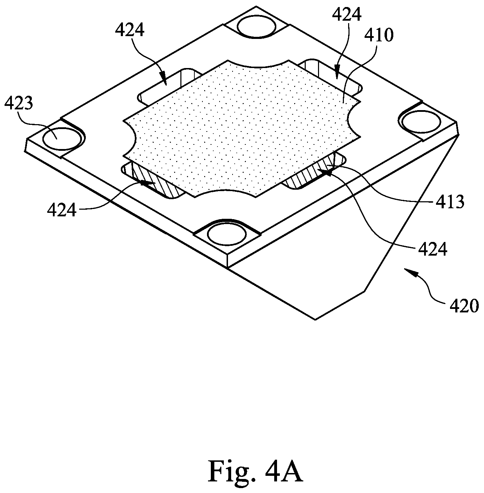

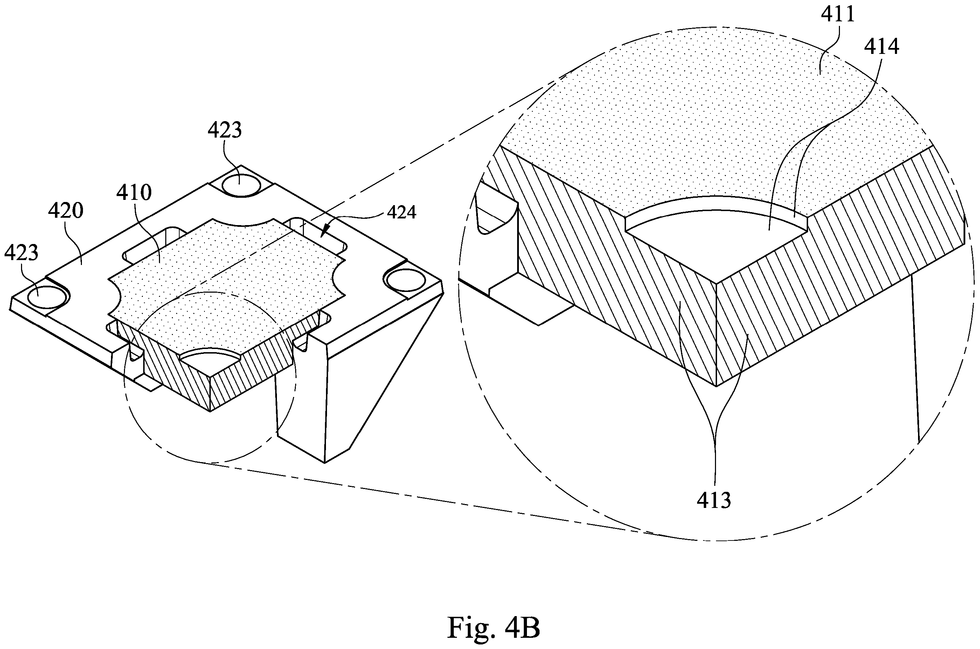

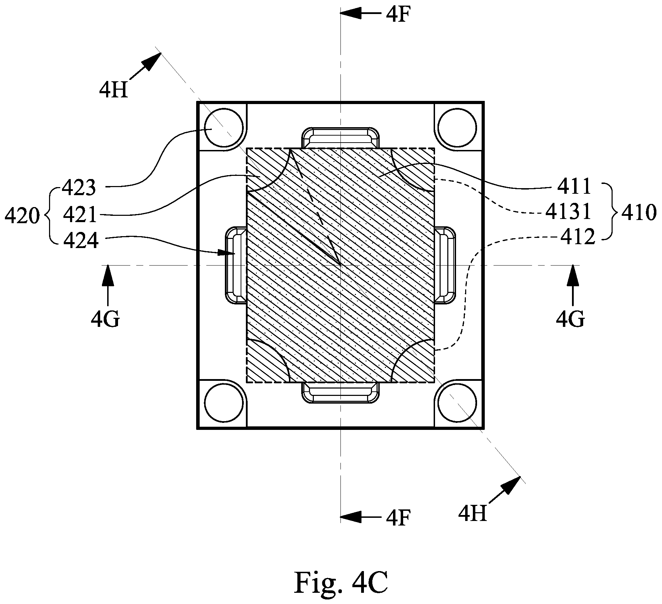

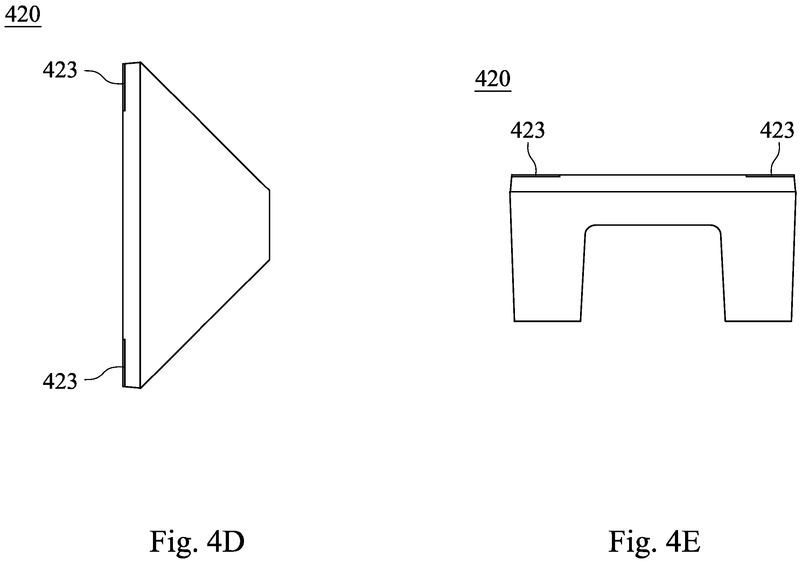

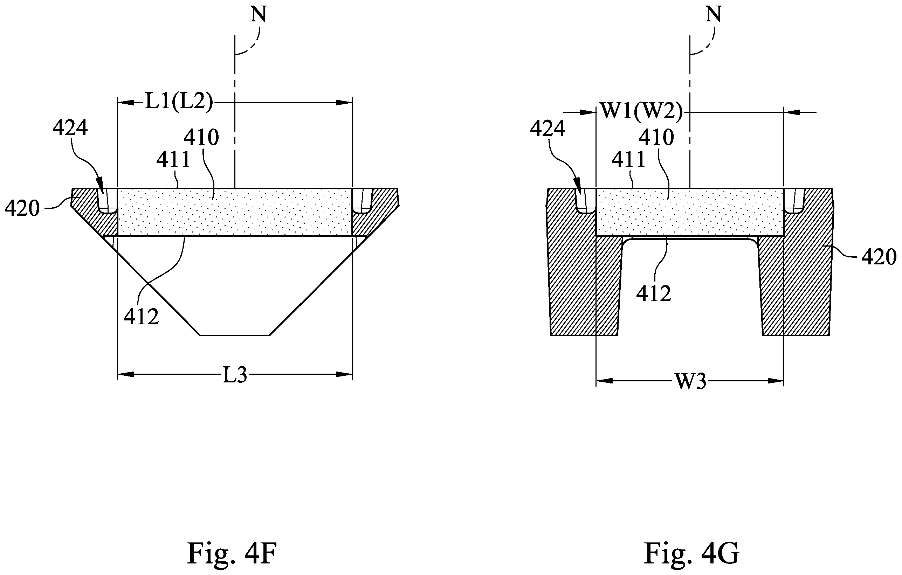

Fig. 4A is a schematic view of an optical reflecting element 410 and an optical reflecting element embedded carrier 420 of the imaging lens assembly (its reference numeral is omitted) according to the 1st example of the 4th embodiment of the present disclosure. Fig. 4B is another schematic view of the optical reflecting element 410 and the optical reflecting element embedded carrier 420 of Fig. 4A. Fig. 4C is a plane view of the optical reflecting element 410 and the optical reflecting element embedded carrier 420 of Fig. 4A. Fig. 4D is a side view of the optical reflecting element embedded carrier 420 of Fig. 4A. Fig. 4E is another side view of the optical reflecting element embedded carrier 420 of Fig. 4A. According to the 1st example of the 4th embodiment in Fig. 4A to Fig. 4E, the imaging lens assembly includes a barrel assembly (its reference numeral is omitted), an optical reflecting element 410 and an optical reflecting element embedded carrier 420, wherein the optical reflecting element 410 has a normal axis N (labeled in Fig. 4F), the optical reflecting element 410 is for folding an incident light path into an exiting light path symmetrically relative to the normal axis N. The optical reflecting element embedded carrier 420 is for fixing the optical reflecting element 410, and the optical reflecting element 410 is embedded thereinto, wherein the optical reflecting element 410 and the optical reflecting element embedded carrier 420 are integrally formed by insert molding. Further, the structure relationships, the arrangements and the details between the barrel assembly and each of the optical reflecting element 410 and the optical reflecting element embedded carrier 420 are the same with or similar to the aforementioned 1st embodiment, and will not be described again herein.

Fig. 4F is a cross-sectional view along Line 4F-4F of Fig. 4C. Fig. 4G is a cross-sectional view along Line 4G-4G of Fig. 4C. In Fig. 4A to Fig. 4C and Fig. 4F to Fig. 4G, the optical reflecting element 410 includes the optical effective surface 411, a relative surface 412, the outer diameter surface 413 and the connecting surface 414. The normal axis N passes through the optical effective surface 411 perpendicularly, wherein an area passed through by the normal axis N is defined as an optical effective area, wherein the optical reflecting element 411 is planar. The relative surface 412 is disposed relatively to the optical effective surface 411. The outer diameter surface 413 surrounds the optical effective surface 411 and defines an edge contour 4131, and the edge contour 4131 defines a maximum contour area. The connecting surface 414 connects the optical effective surface 411 and the outer diameter surface 413.

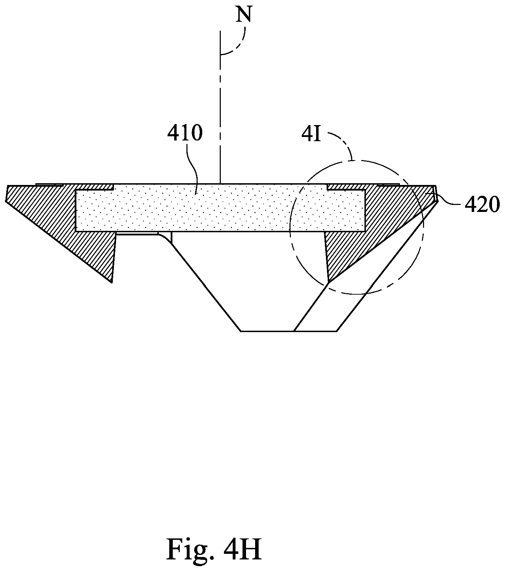

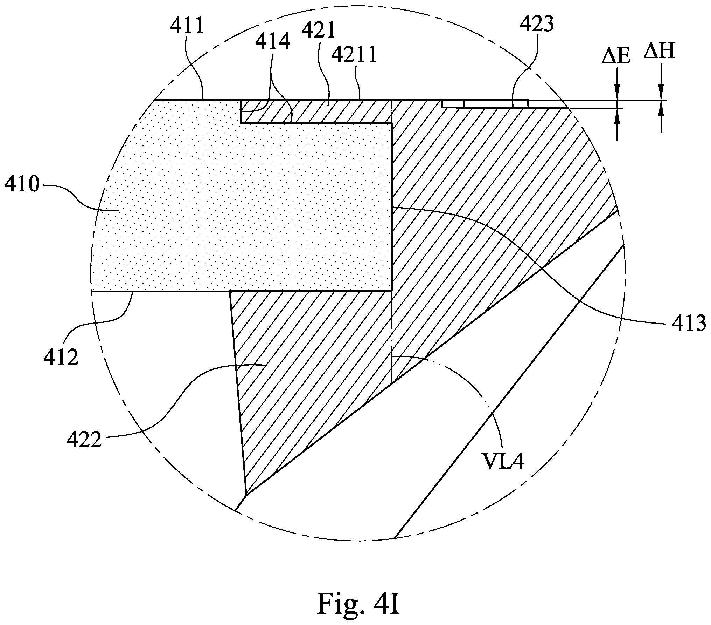

Fig. 4H is a cross-sectional view along Line 4H-4H of Fig. 4C. Fig. 4I is an enlarged view of the area 4I of Fig. 4H. In Fig. 4H and Fig. 4I, the optical reflecting element embedded carrier 420 includes a covering portion 421 and a relative portion 422, the covering portion 421 is disposed on the connecting surface 414, the relative portion 422 is disposed between the outer diameter surface 413 and the relative surface 412. The edge contour 4131 of the outer diameter surface 413 is covered by the covering portion 421 of the optical reflecting element embedded carrier 420 corresponding to an observation along a direction parallel to the normal axis N, and the covering portion 421 and the relative portion 422 are overlapped along the direction parallel to the normal axis N. In detail, a virtual line VL4 in Fig. 4I is defined. The virtual line VL4 is extended along the direction parallel to the normal axis N from the outer diameter surface 413, the portion at the side of the virtual line VL4 towards the normal axis N is the covering portion 421 and the relative portion 422. The present disclosure will not be limited thereto, and the virtual line VL4 does not exist in the actual structure.

Further, in Fig. 4A to Fig. 4E and Fig. 4I, the optical reflecting element embedded carrier 420 can further include a stepping structure (its reference numeral is omitted), the stepping structure includes a stepping surface 423, and the stepping structure is disposed adjacent to the optical effective surface 411. Specifically, in Fig. 4A, according to the 1st example of the 4th embodiment, a number of the stepping structures is four, which are located on four corners of one side of the optical reflecting element embedded carrier 420, respectively, and are at the same side of the optical effective surface 411, but the present disclosure will not be limited thereto.

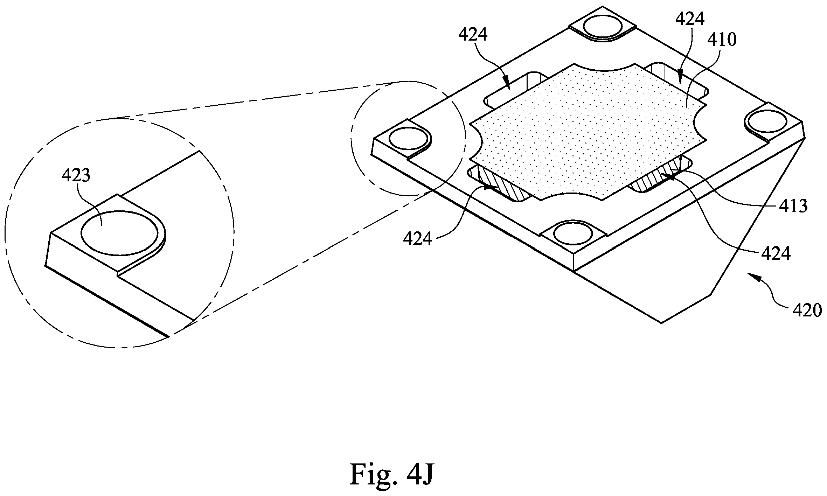

In Fig. 4A, Fig. 4C, Fig. 4F, Fig. 4G and Fig. 4J, the optical reflecting element embedded carrier 420 can further include a positioning structure 424. According to the 1st example of the 4th embodiment, a number of the positioning structures 424 is four, which are arranged on the optical reflecting element embedded carrier 420 symmetrically, and are located on four edges of the side which is the same of the stepping surfaces 423, but the present disclosure will not be limited thereto. In detail, during the insert molding process, the optical reflecting element 410 can be positioned with a positioning structure (not shown in the drawings) of the mold and then the plastic insert molding can be proceeded so as to form the optical reflecting element embedded carrier 420 covering the optical reflecting element 410. After demolding, a hole left on the optical reflecting element embedded carrier 420 corresponding to the positioning structure of the mold is the positioning structure 424 of the optical reflecting element embedded carrier 420.

In Fig. 4F, Fig. 4G and Fig. 4I, when a length of the optical effective surface 411 is L1, a width of the optical effective surface 411 is W1, the optical effective area of the optical effective surface 411 is Ao (Ao = L1×W1), a length of the edge contour 4131 of the outer diameter surface 413 is L2, a width of the edge contour 4131 of the outer diameter surface 413 is W2, the maximum contour area of the outer diameter surface 413 is Ac (Ac = L2×W2), an angle of a range of the maximum contour area Ac covered by the covering portion 421 along a circumferential direction around the normal axis N is θ, a height difference between the optical effective surface 411 and one surface of the covering portion 421 along the direction parallel to the normal axis N is ΔH, and a height difference between the stepping surface 423 and one surface 4211 of the covering portion 421 along the direction parallel to the normal axis N is ΔE, the values in the following Table 4A are satisfied.

| Table 4A, 1st example of 4th embodiment | | | | |
|---|---|---|---|---|
| Ao (mm$^2$) | Ac (mm$^2$) | θ (deg.) | ΔH (mm) | ΔE (mm) |
| 104.15 | 120.05 | 113.2 | 0 | -0.11 |

Moreover, in Fig. 4F and Fig. 4G, a length of the relative surface 412 being L3 and a width of the relative surface 412 being W3 are labelled, which represent the range of the relative surface 412, the values thereof are not the technical points in the present disclosure, and will not be described herein. Furthermore, in Fig. 4F and Fig. 4G, according to the 1st example of the 4th embodiment, the length of the optical effective surface 411 being L1 is equal to the length of the edge contour 4131 of the outer diameter surface 413 being L2, the width of the optical effective surface 411 being W1 is equal to the width of the edge contour 4131 of the outer diameter surface 413 being W2.

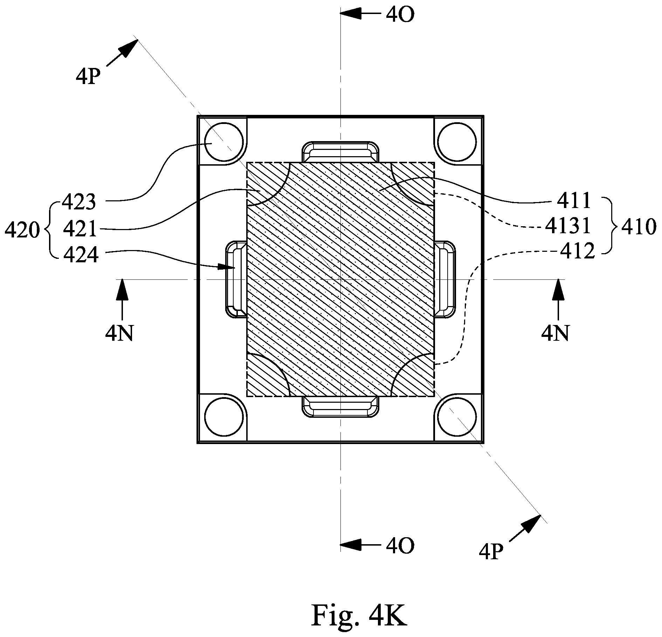

Fig. 4J is a schematic view of an optical reflecting element 410 and an optical reflecting element embedded carrier 420 of the imaging lens assembly according to the 2nd example of the 4th embodiment of the present disclosure. Fig. 4K is a plane view of the optical reflecting element 410 and the optical reflecting element embedded carrier 420 of Fig.

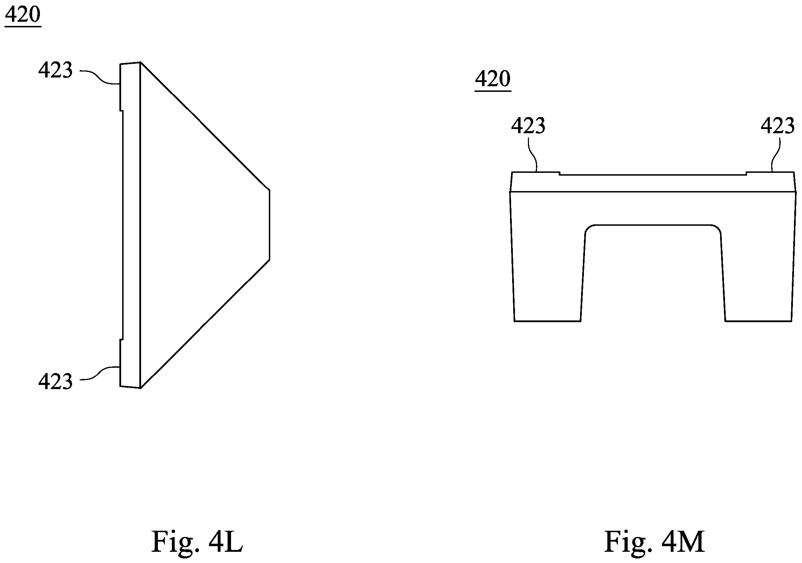

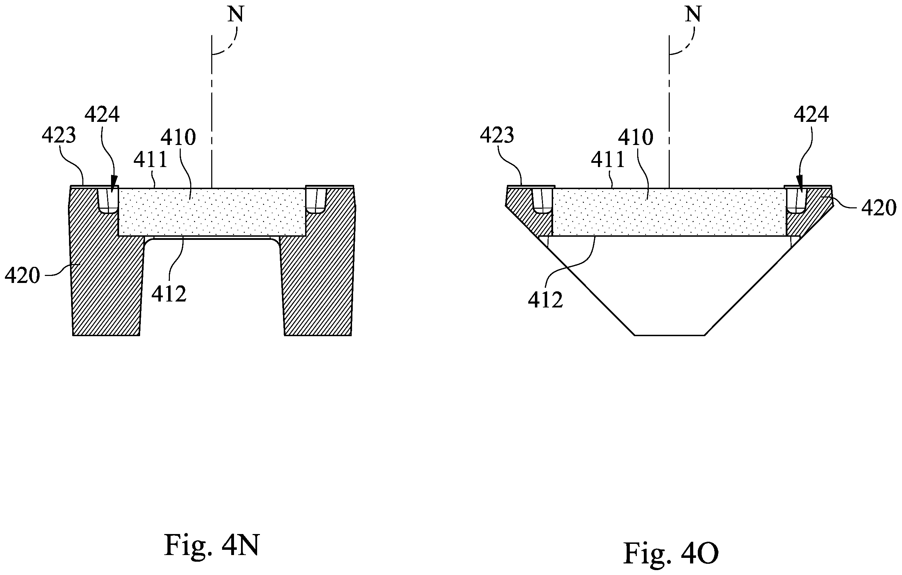

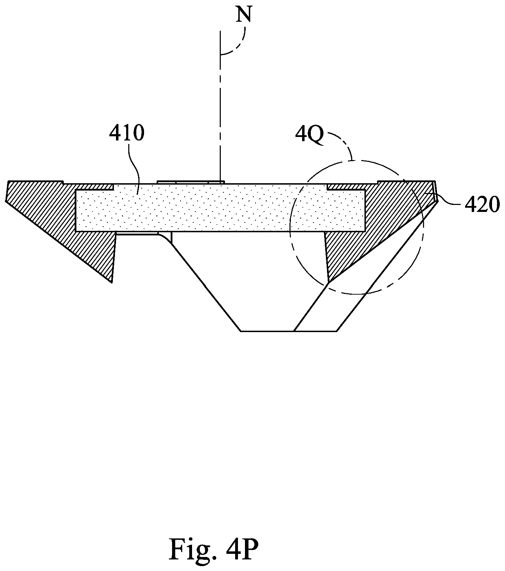

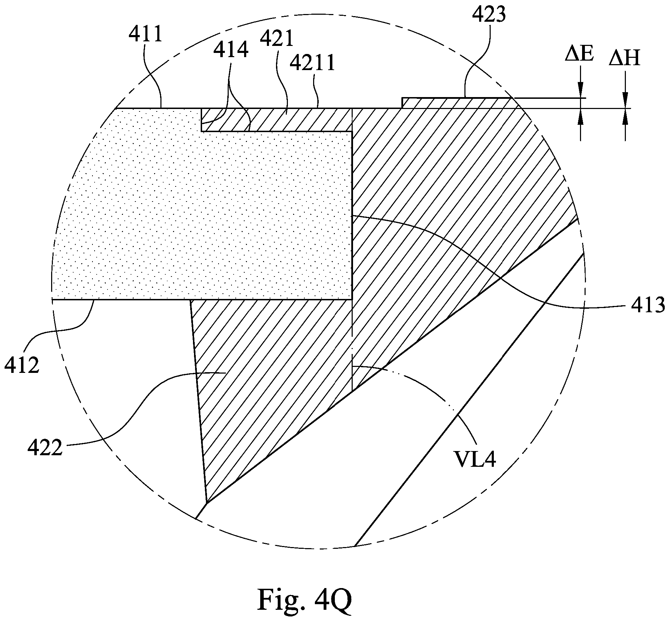

4J. Fig. 4L is a side view of the optical reflecting element embedded carrier 420 of Fig. 4J. Fig. 4M is another side view of the optical reflecting element embedded carrier 420 of Fig. 4J. Fig. 4N is a cross-sectional view along Line 4N-4N of Fig. 4K. Fig. 4O is a cross-sectional view along Line 4O-4O of Fig. 4K. Fig. 4P is a cross-sectional view along Line 4P-4P of Fig. 4K. Fig. 4Q is an enlarged view of the area 4Q of Fig. 4P. In Fig. 4J to Fig. 4Q, the difference between the optical reflecting element 410 and the optical reflecting element embedded carrier 420 of the imaging lens assembly according to the 2nd example of the 4th embodiment and the optical reflecting element 410 and the optical reflecting element embedded carrier 420 of the imaging lens assembly according to the 1st example of the 4th embodiment is, the stepping surface 423 of the stepping structure (its reference numeral is omitted) of the optical reflecting element embedded carrier 420 is higher than the surface 4211 of the covering portion 421 of the optical reflecting element embedded carrier 420. In detail, a virtual line VL4 in Fig. 4Q is defined. The virtual line VL4 is extended along the direction parallel to the normal axis N from the outer diameter surface 413, the portion at the side of the virtual line VL4 towards the normal axis N is the covering portion 421. The present disclosure will not be limited thereto, and the virtual line VL4 does not exist in the actual structure. In the 2nd example of the 4th embodiment, other elements and the structure relationships are the same with or similar to the 1st example of the 4th embodiment, and will not be described again herein.

According to the 2nd example of the 4th embodiment, the definitions of parameters Ao, Ac, θ, ΔH and ΔE are the same with the 1st example of the 4th embodiment, and the values in the following Table 4B are satisfied.

| Table 4B, 2nd example of 4th embodiment | | | | |
|---|---|---|---|---|
| Ao (mm$^2$) | Ac (mm$^2$) | θ (deg.) | ΔH (mm) | ΔE (mm) |
| 104.15 | 120.05 | 113.2 | 0 | 0.14 |

The values of each surface accuracy PV according to the 1st and the 2nd examples of the 4th embodiment are listed in Table 4C as below, which can be defined as the surface accuracy PV in the 1st and the 2nd examples of the 1st embodiment, and will not be described again herein.

| Table 4C, 1st example and 2nd example of 4th embodiment | | | | | | |
|---|---|---|---|---|---|---|
| Measurement machine: ZYGO GPI XPS | PV (μm) | | | | | |
| | 1st measuring location | | 2nd measuring location | | 3rd measuring location | |
| | Direction A | Direction B | Direction A | Direction B | Direction A | Direction B |
| | 0.117 | 0.084 | 0.064 | 0.068 | 0.102 | 0.2 |

<5th Embodiment>

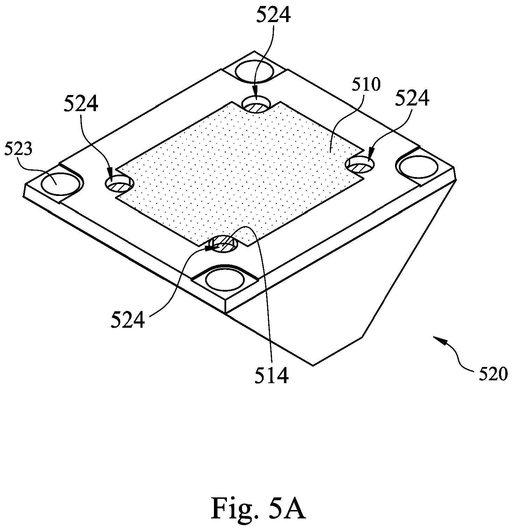

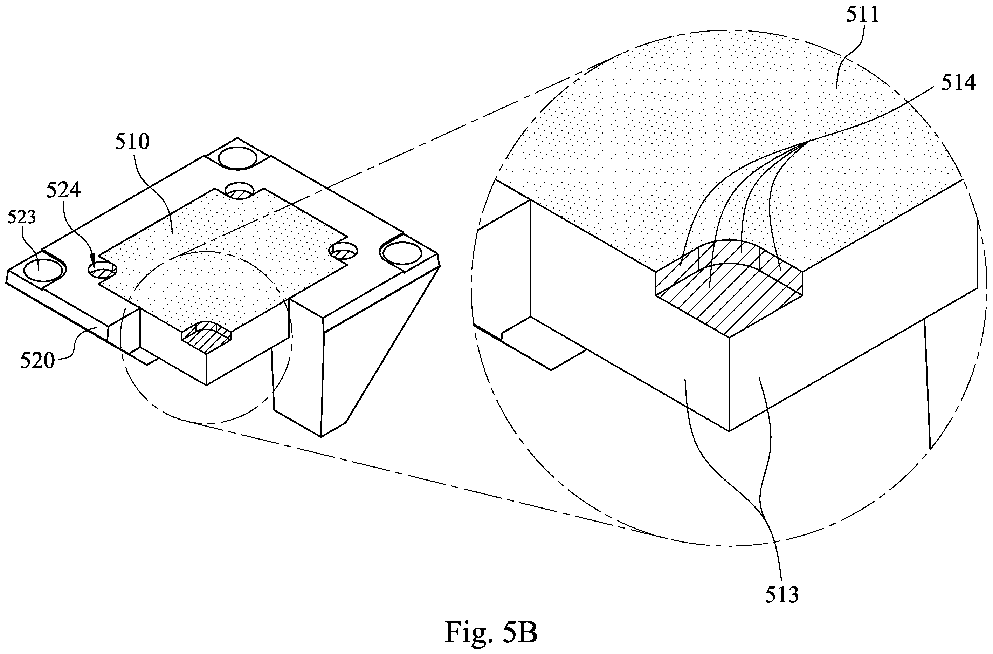

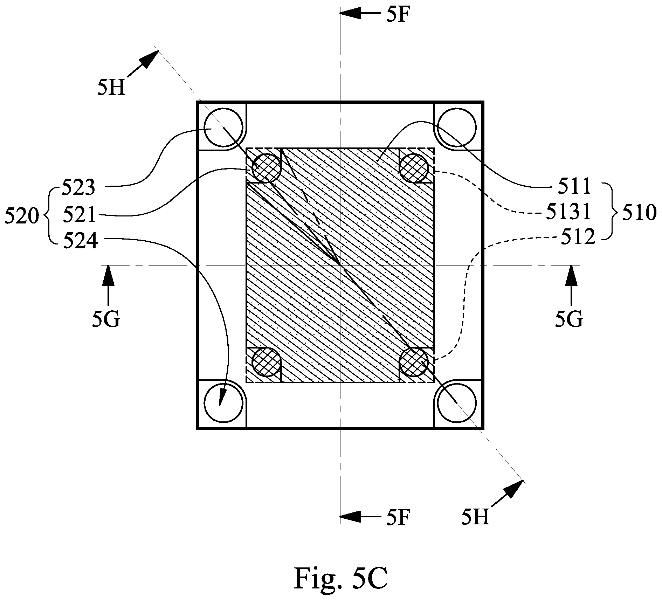

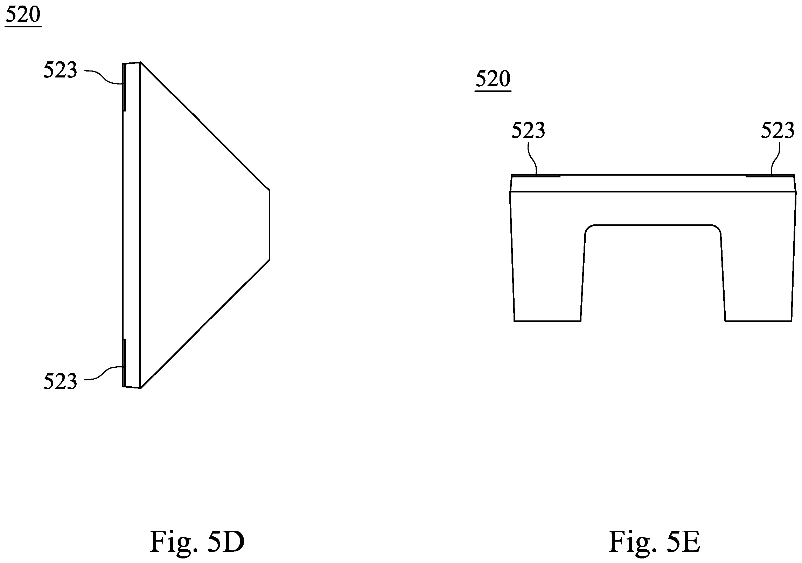

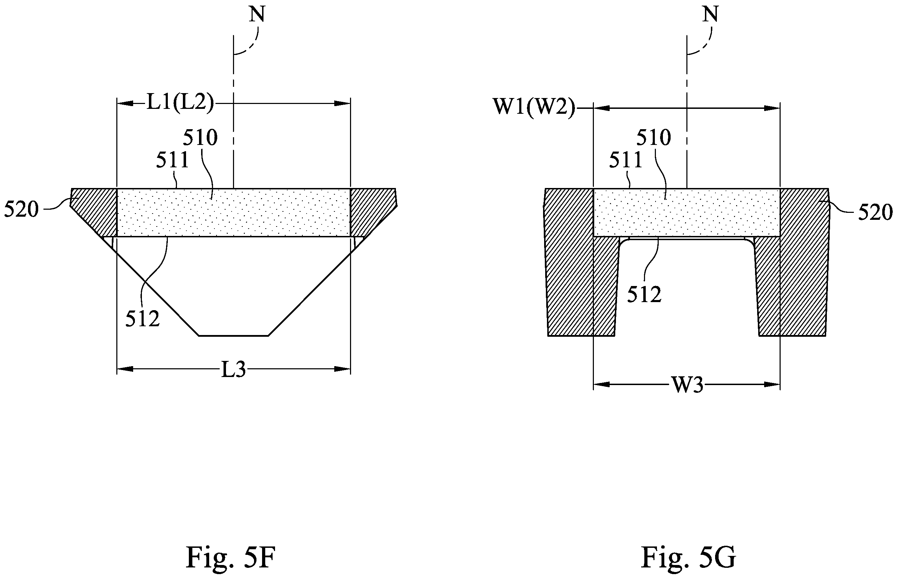

Fig. 5A is a schematic view of an optical reflecting element 510 and an optical reflecting element embedded carrier 520 of the imaging lens assembly (its reference numeral is omitted) according to the 1st example of the 5th embodiment of the present disclosure. Fig. 5B is another schematic view of the optical reflecting element 510 and the optical reflecting element embedded carrier 520 of Fig. 5A. Fig. 5C is a plane view of the optical reflecting element 510 and the optical reflecting element embedded carrier 520 of Fig. 5A. Fig. 5D is a side view of the optical reflecting element embedded carrier 520 of Fig. 5A. Fig. 5E is another side view of the optical reflecting element embedded carrier 520 of Fig. 5A. According to the 1st example of the 5th embodiment in Fig. 5A to Fig. 5E, the imaging lens assembly includes a barrel assembly (its reference numeral is omitted), an optical reflecting element 510 and an optical reflecting element embedded carrier 520, wherein the optical reflecting element 510 has a normal axis N (labeled in Fig. 5F), the optical reflecting element 510 is for folding an incident light path into an exiting light path symmetrically relative to the normal axis N. The optical reflecting element embedded carrier 520 is for fixing the optical reflecting element 510, and the optical reflecting element 510 is embedded thereinto, wherein the optical reflecting element 510 and the optical reflecting element embedded carrier 520 are integrally formed by insert molding. Further, the structure relationships, the arrangements and the details between the barrel assembly and each of the optical reflecting element 510 and the optical reflecting element embedded carrier 520 are the same with or similar to the aforementioned 1st embodiment, and will not be described again herein.

Fig. 5F is a cross-sectional view along Line 5F-5F of Fig. 5C. Fig. 5G is a cross-sectional view along Line 5G-5G of Fig. 5C. In Fig. 5A to Fig. 5C and Fig. 5F to Fig. 5G, the optical reflecting element 510 includes the optical effective surface 511, a relative surface 512, the outer diameter surface 513 and the connecting surface 514. The normal axis N passes through the optical effective surface 511 perpendicularly, wherein an area passed through by the normal axis N is defined as an optical effective area, wherein the optical reflecting element 511 is planar. The relative surface 512 is disposed relatively to the optical effective surface 511. The outer diameter surface 513 surrounds the optical effective surface 511 and defines an edge contour 5131, and the edge contour 5131 defines a maximum contour area. The connecting surface 514 connects the optical effective surface 511 and the outer diameter surface 513. It should be mentioned that, in Fig. 5B, the arrangement of the connecting surface 514 forms a concave structure on the optical effective surface 511 so as to connect the optical effective surface 511 and the outer diameter surface 513.

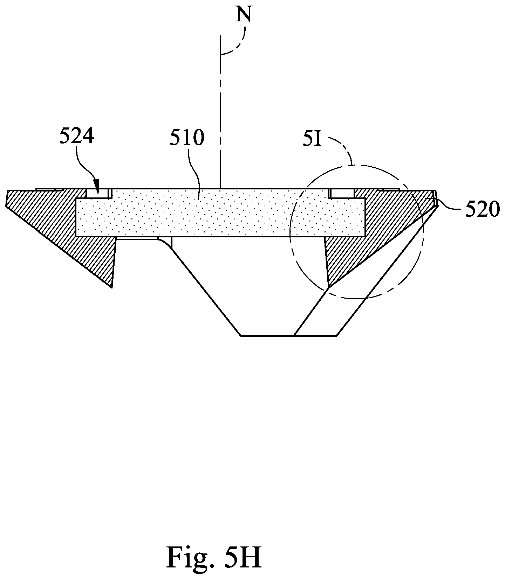

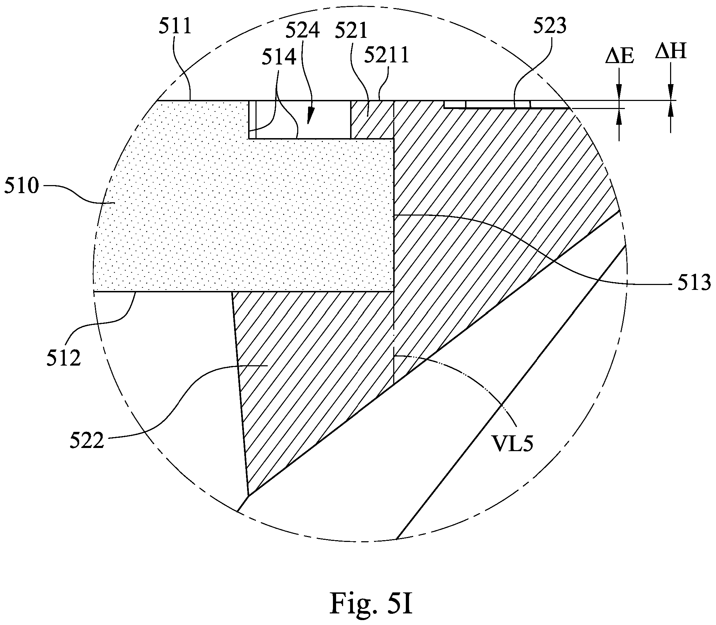

Fig. 5H is a cross-sectional view along Line 5H-5H of Fig. 5C. Fig. 5I is an enlarged view of the area 5I of Fig. 5H. In Fig. 5H and Fig. 5I, the optical reflecting element embedded carrier 520 includes a covering portion 521 and a relative portion 522, the covering portion 521 is disposed on the connecting surface 514, the relative portion 522 is disposed between the outer diameter surface 513 and the relative surface 512. The edge contour 5131 of the outer diameter surface 513 is covered by the covering portion 521 of the optical reflecting element embedded carrier 520 corresponding to an observation along a direction parallel to the normal axis N, and the covering portion 521 and the relative portion 522 are overlapped along the direction parallel to the normal axis N. In detail, a virtual line VL5 in Fig. 5I is defined. The virtual line VL5 is extended along the direction parallel to the normal axis N from the outer diameter surface 513, the portion at the side of the virtual line VL5 towards the normal axis N is the covering portion 521 and the relative portion 522. The present disclosure will not be limited thereto, and the virtual line VL5 does not exist in the actual structure.

Further, in Fig. 5A to Fig. 5E and Fig. 5I, the optical reflecting element embedded carrier 520 can further include a stepping structure (its reference numeral is omitted), the stepping structure includes a stepping surface 523, and the stepping structure is disposed adjacent to the optical effective surface 511. Specifically, in Fig. 5A, according to the 1st example of the 5th embodiment, a number of the stepping structures is four, which are located on four corners of one side of the optical reflecting element embedded carrier 520, respectively, and are at the same side of the optical effective surface 511, but the present disclosure will not be limited thereto.

In Fig. 5A, Fig. 5C, Fig. 5H and Fig. 5I, the optical reflecting element embedded carrier 520 can further include a positioning structure 524. According to the 1st example of the 5th embodiment, a number of the positioning structures 524 is four, which are arranged on the optical reflecting element embedded carrier 520 symmetrically, the positioning structures 524 are located on the same side with the stepping surfaces 523 and relative to the connecting surface 514 of the optical reflecting element 510, but the present disclosure will not be limited thereto. In detail, during the insert molding process, the optical reflecting element 510 can be positioned with a positioning structure (not shown in the drawings) of the mold and then the plastic insert molding can be proceeded so as to form the optical reflecting element embedded carrier 520 covering the optical reflecting element 510. After demolding, a hole left on the optical reflecting element embedded carrier 520 corresponding to the positioning structure of the mold is the positioning structure 524 of the optical reflecting element embedded carrier 520.

In Fig. 5F, Fig. 5G and Fig. 5I, when a length of the optical effective surface 511 is L1, a width of the optical effective surface 511 is W1, the optical effective area of the optical effective surface 511 is Ao (Ao = L1×W1), a length of the edge contour 5131 of the outer diameter surface 513 is L2, a width of the edge contour 5131 of the outer diameter surface 513 is W2, the maximum contour area of the outer diameter surface 513 is Ac (Ac = L2×W2), an angle of a range of the maximum contour area Ac covered by the covering portion 521 along a circumferential direction around the normal axis N is θ, a height difference between the optical effective surface 511 and one surface of the covering portion 521 along the direction parallel to the normal axis N is ΔH, and a height difference between the stepping surface 523 and one surface 5211 of the covering portion 521 along the direction parallel to the normal axis N is ΔE, the values in the following Table 5A are satisfied.

| Table 5A, 1st example of 5th embodiment | | | | |
|---|---|---|---|---|
| Ao (mm$^2$) | Ac (mm$^2$) | θ (deg.) | ΔH (mm) | ΔE (mm) |
| 107.42 | 120.05 | 87.6 | 0 | -0.11 |

Moreover, in Fig. 5F and Fig. 5G, a length of the relative surface 512 being L3 and a width of the relative surface 512 being W3 are labelled, which represent the range of the relative surface 512, the values thereof are not the technical points in the present disclosure, and will not be described herein. Furthermore, in Fig. 5F and Fig. 5G, according to the 1st example of the 5th embodiment, the length of the optical effective surface 511 being L1 is equal to the length of the edge contour 5131 of the outer diameter surface 513 being L2, the width of the optical effective surface 511 being W1 is equal to the width of the edge contour 5131 of the outer diameter surface 513 being W2.

The values of each surface accuracy PV according to the 1st example of the 5th embodiment are listed in Table 5B as below, which can be defined as the surface accuracy PV in the 1st and the 2nd examples of the 1st embodiment, and will not be described again herein.

| Table 5B, 1st example of 5th embodiment | | | | | |
|---|---|---|---|---|---|
| Measurement machine: ZYGO GPI XPS | PV (μm) | | | | |
| | 1st measuring location | | 2nd measuring location | | 3rd measuring location | |
| | Direction A | Direction B | Direction A | Direction B | Direction A | Direction B |
| | 0.118 | 0.093 | 0.08 | 0.077 | 0.042 | 0.111 |

<6th Embodiment>

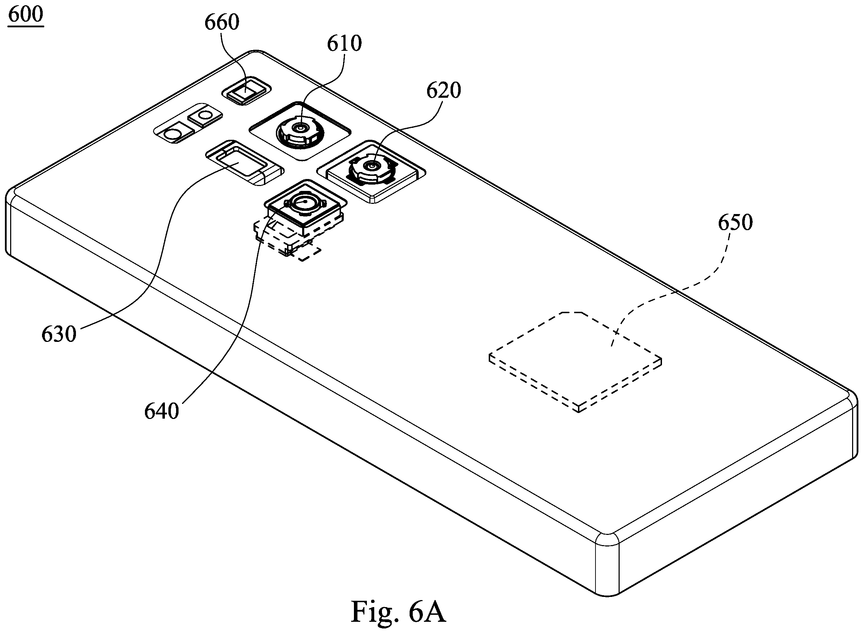

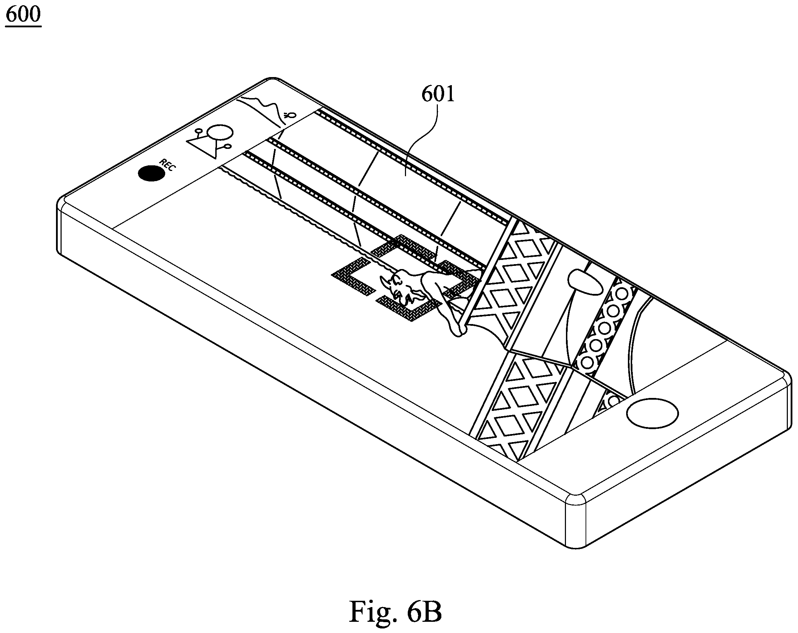

Fig. 6A is a schematic view of an electronic device 600 according to the 6th embodiment of the present disclosure. Fig. 6B is another schematic view of the electronic device 600 according to the 6th embodiment of Fig. 6A. As shown in Fig. 6A and Fig. 6B, the electronic device 600 is a smartphone. The electronic device 600 includes camera modules and a user interface 601. In detail, the camera modules are a high-pixel camera module 610, an ultra-wide-angle camera module 620, and two telephoto camera modules 630, 640, and the user interface 601 is a touch screen, but the present disclosure is not limited thereto. Specifically, each of the camera modules can include the imaging lens assembly of any one of the examples according to the aforementioned 1st to 5th embodiments and an image sensor, wherein the image sensor is disposed on an image surface of the imaging lens assembly, and will not be limited thereto.

A user enters a shooting mode via the user interface 601. The user interface 601 is used to display the screen, and the shooting angle can be manually adjusted to switch between different camera modules. At this moment, the camera modules collect an imaging light on the respective image sensor (not shown in figures) and output electronic signals associated with images to an image signal processor (ISP) 650.

As shown in Fig. 6A, according to the camera specifications of the electronic device 600, the electronic device 600 can further include an optical anti-shake mechanism (not shown in figures). Further, the electronic device 600 can further include at least one focusing assisting module (not shown in figures) and at least one sensing component (not shown in figures). The focusing assisting module can be a flash module 660, an infrared distance measurement component, a laser focus module, etc. The flash module is for compensating the color temperature. The sensing component can have functions for sensing physical momentum and kinetic energies, such as an accelerator, a gyroscope, and a Hall effect element, so as to sense shaking or jitters applied by hands of the user or external environments. Thus the autofocus function and the optical anti-shake mechanism of the imaging lens assembly disposed on the electronic device 600 can function to obtain a great image quality and facilitate the electronic device 600 according to the present disclosure to have a capturing function with multiple modes, such as taking optimized selfies, high dynamic range (HDR) with a low light source, 4K resolution recording, etc. Furthermore, the user can visually see the captured image of the camera through the user interface 601 and manually operate the view finding range on the user interface 601 to achieve the auto focus function of what you see is what you get.

Furthermore, the camera modules, the optical anti-shake mechanism, the sensing component and the focusing assisting module can be disposed on a flexible printed circuit board (FPC) (not shown in figures) and electrically connected to the image signal processor 650 and so on via a connector (not shown in figures) so as to operate a picturing process. Recent electronic devices such as smartphones have a trend towards thinness and lightness. The camera modules and the related elements are disposed on a FPC and circuits are assembled into a main board of an electronic device by a connector. Hence, it can fulfill a mechanical design of a limited inner space of the electronic device and a requirement of a circuit layout and obtain a larger allowance, and it is also favorable for autofocus functions of the camera modules obtaining a flexible control via a touch screen of the electronic device. In the 6th embodiment, the electronic device 600 can include a plurality of the sensing components and a plurality of the focusing assisting modules, and the sensing components and the focusing assisting modules are disposed on an FPC and another at least one FPC (not shown in figures) and electrically connected to the image signal processor 650 and so on via a corresponding connector so as to operate a picturing process. In other embodiments (not shown in figures), the sensing components and auxiliary optical elements can be disposed on a main board of an electronic device or a board of the other form according to a mechanical design and a requirement of a circuit layout.

Furthermore, the electronic device 600 can further include, but not be limited to, a display, a control unit, a storage unit, a random-access memory (RAM), a read-only memory (ROM), or the combination thereof.

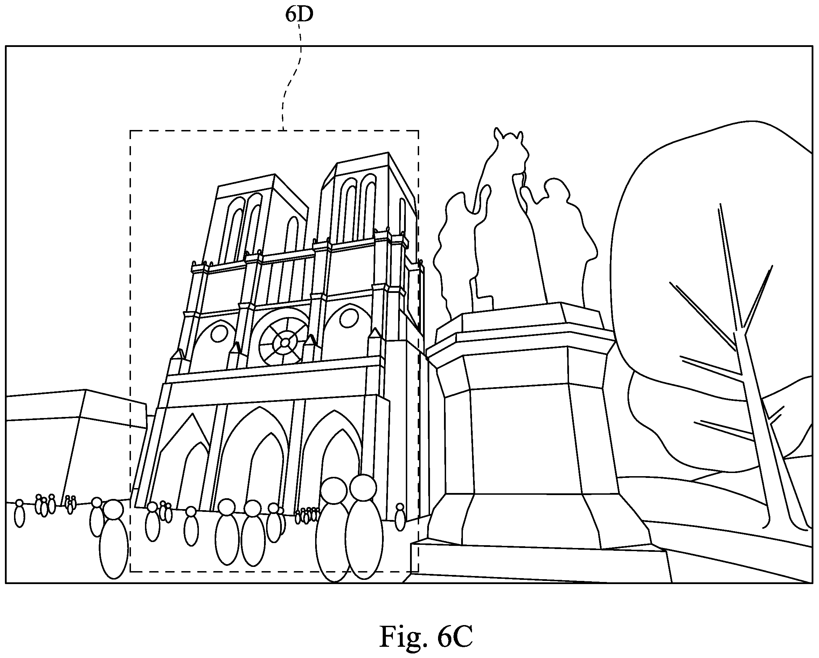

Fig. 6C is a schematic view of an image captured via the electronic device 600 according to the 6th embodiment of Fig. 6A. As shown in Fig. 6C, a larger ranged image can be captured via the ultra-wide-angle camera module 620, which has a function for containing more views.

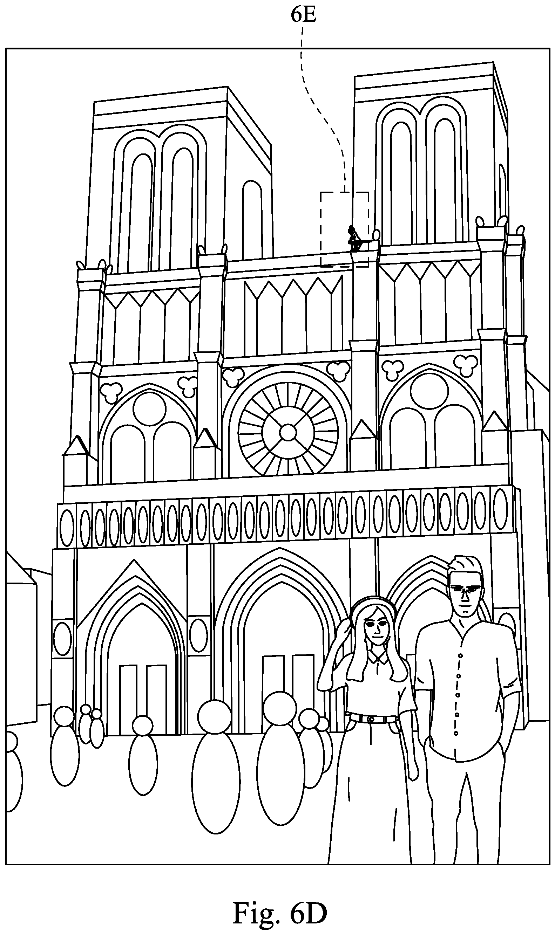

Fig. 6D is another schematic view of the image captured via the electronic device 600 according to the 6th embodiment of Fig. 6A. As shown in Fig. 6D, a certain ranged and high-pixel image can be captured via the high-pixel camera module 610, which has a function for high resolution and low distortion.

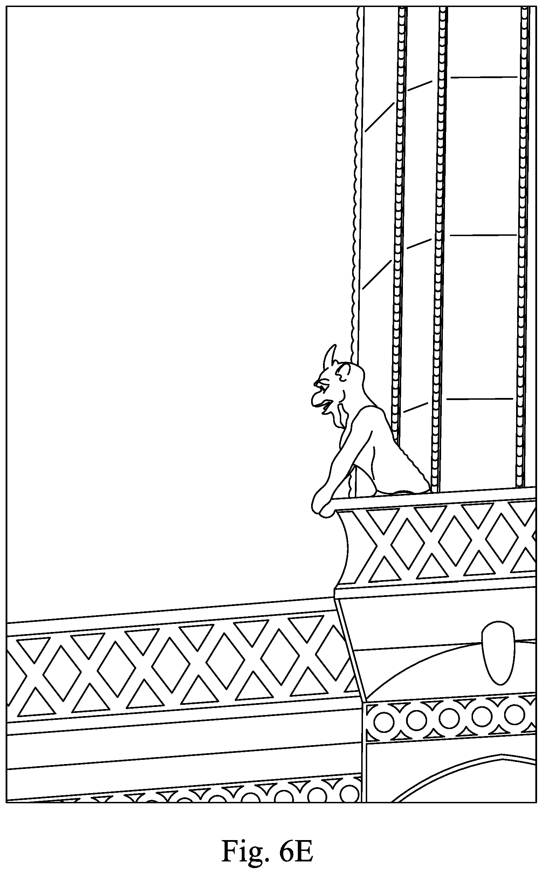

Fig. 6E is the other schematic view of the image captured via the electronic device 600 according to the 6th embodiment of Fig. 6A. As shown in Fig. 6E, a far image can be captured and enlarged to a high magnification via the telephoto camera modules 630, 640, which has a function for a high magnification.

As shown in Fig. 6C to Fig. 6E, when an image is captured via different camera modules having various focal lengths and processed via a technology of an image processing, a zoom function of the electronic device 600 can be achieved.

<7th Embodiment>

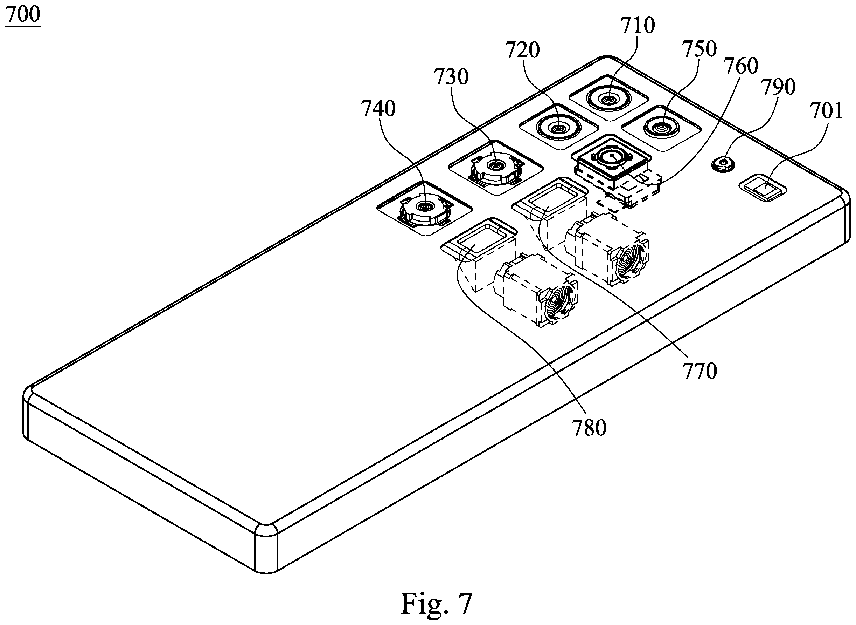

Fig. 7 is a schematic view of an electronic device 700 according to the 7th embodiment of the present disclosure. As shown in Fig. 7, the electronic device 700 is a smartphone. The electronic device 700 includes a plurality of camera modules. In detail, camera modules are two ultra-wide-angle camera modules 710, 720, two wide angle camera modules 730, 740, and four telephoto camera modules 750, 760, 770, 780, the camera module 790 is Time-Of-Flight (TOF) module and can be other types of camera module, which will not be limited to the present arrangement. Specifically, each of the camera modules can include the imaging lens assembly of any one of the examples according to the aforementioned 1st to 5th embodiments and an image sensor, wherein the image sensor is disposed on an image surface of the imaging lens assembly, and will not be limited thereto.

Further, the camera modules 770, 780 can have folding function of the light path, but the present disclosure will not be limited thereto.

According to the camera specifications of the electronic device 700, the electronic device 700 can further include an optical anti-shake mechanism (not shown in figures). Further, the electronic device 700 can further include at least one focusing assisting module (not shown in figures) and at least one sensing component (not shown in figures). The focusing assisting module can be a flash module 701, an infrared distance measurement component, a laser focus module, etc. The flash module 701 is for compensating the color temperature. The sensing component can have functions for sensing physical momentum and kinetic energies, such as an accelerator, a gyroscope, and a Hall effect element, so as to sense shaking or jitters applied by hands of the user or external environments. Thus, the autofocus function and the optical anti-shake mechanism of the camera modules disposed on the electronic device 700 can function to obtain a great image quality and facilitate the electronic device 700 according to the present disclosure to have a capturing function with multiple modes, such as taking optimized selfies, high dynamic range (HDR) with a low light source, 4K resolution recording, etc.

Furthermore, all of other structures and dispositions according to the 7th embodiment are the same as the structures and the dispositions according to the 6th embodiment, and will not be described again herein.

<8th Embodiment>

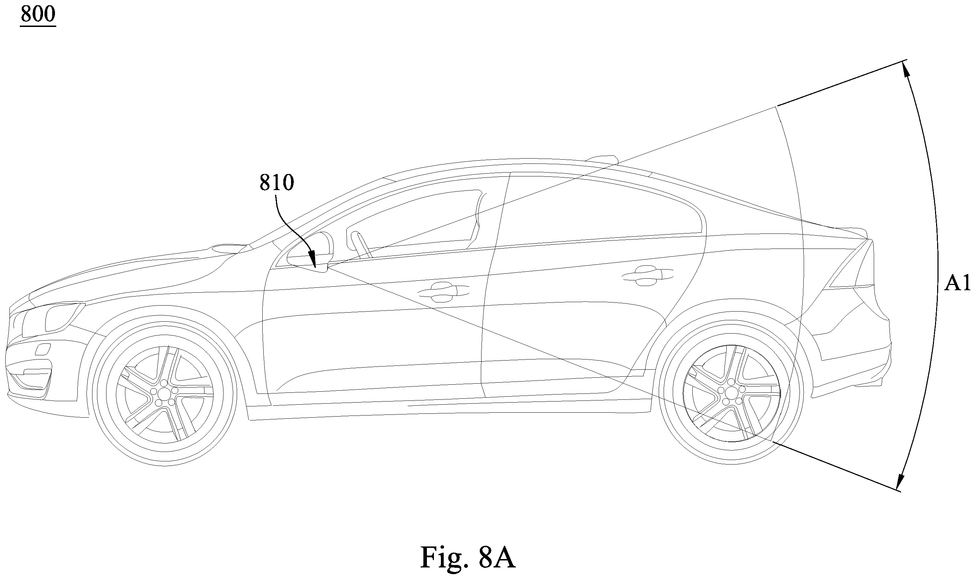

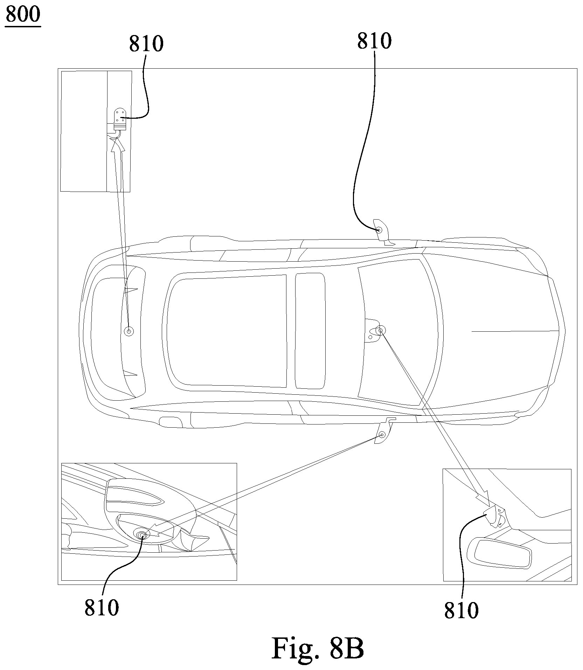

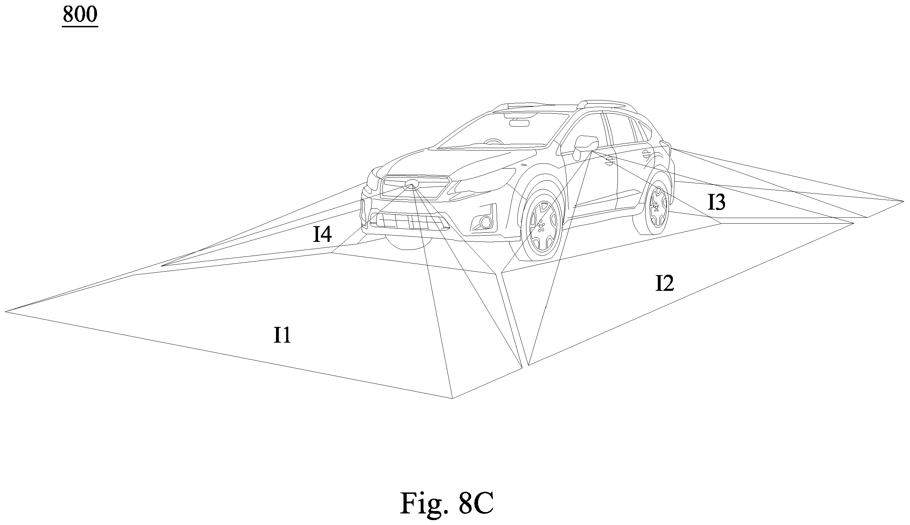

Fig. 8A is a schematic view of a vehicle instrument 800 according to the 8th embodiment of the present disclosure. Fig. 8B is another schematic view of the vehicle instrument 800 according to the 8th embodiment in Fig. 8A. Fig. 8C is another schematic view of the vehicle instrument 800 according to the 8th embodiment in Fig. 8A. In Figs. 8A to 8C, the vehicle instrument 800 includes a plurality of camera modules 810. According to the 8th embodiment, a number of the camera modules 810 is six, and the camera modules 810 can include the imaging lens assembly of any one of the examples according to the aforementioned 1st to 5th embodiments and an image sensor, wherein the image sensor is disposed on an image surface of the imaging lens assembly, and will not be limited thereto.

In Figs. 8A and 8B, the camera modules 810 are automotive camera modules, two of the camera modules 810 are located under rearview mirrors on a left side and a right side, respectively, and the aforementioned camera modules 810 are configured to capture the image information of a visual angle A1. In particular, the visual angle A1 can satisfy the following condition: 40 degrees < A1 < 90 degrees. Therefore, the image information in the regions of two lanes on the left side and the right side can be captured.

In Fig. 8B, another two of the camera modules 810 can be disposed in the inner space of the vehicle instrument 800. In particular, the aforementioned two camera modules 810 are disposed on a location close to the rearview mirror inside the vehicle instrument 800 and a location close to the rear car window, respectively. Moreover, the camera modules 810 can be further disposed on the rearview mirrors of the vehicle instrument 800 on the left side and the right side except the mirror surface, respectively, but the present disclosure is not limited thereto.

In Fig. 8C, another two of the camera modules 810 can be disposed on a front end of the vehicle instrument 800 and a rear end of the vehicle instrument 800, respectively. By disposing the camera modules 810 on the front end and the rear end of the vehicle instrument 800 and under the rearview mirror on the left side of the vehicle instrument 800 and the right side of the vehicle instrument 800, it is favorable for the drivers obtaining the external space information in addition to the driving seat, such as the external space informations I1, I2, I3, I4, but the present disclosure is not limited thereto. Therefore, more visual angles can be provided to reduce the blind spot, so that the driving safety can be improved. Further, the traffic information outside of the vehicle instrument 800 can be recognized by disposing the camera modules 810 on the periphery of the vehicle instrument 800, so that the function of the automatic driving assistance can be achieved.

<9th Embodiment>

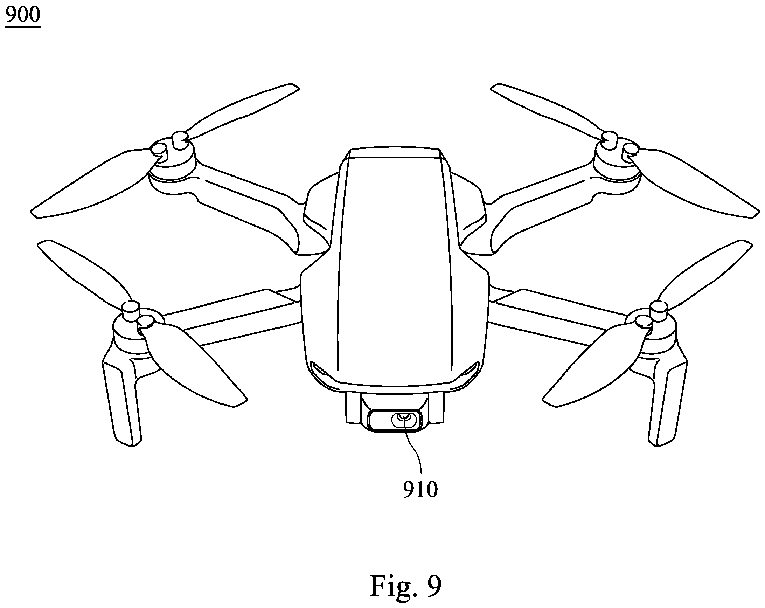

Fig. 9 is a schematic view of an electronic device 900 according to the 9th embodiment of the present disclosure. As shown in Fig. 9, the electronic device 900 is an unmanned aerial vehicle, which includes a camera module 910. According to the 9th embodiment, the camera module 910 can include the imaging lens assembly of any one of the examples according to the aforementioned 1st to 5th embodiments and an image sensor, wherein the image sensor is disposed on an image surface of the imaging lens assembly, and will not be limited thereto.

**Claims**

1. An imaging lens assembly (100), comprising:

    an optical reflecting element (110) having a normal axis (N), the optical reflecting element (110) for folding an incident light path (IL) into an exiting light path (EL) symmetrically relative to the normal axis (N), and comprising:

        an optical effective surface (111), the normal axis (N) passing through the optical effective surface (111) perpendicularly, wherein an area passed through by the normal axis (N) is defined as an optical effective area;
        a relative surface (112) disposed relatively to the optical effective surface (111);
        an outer diameter surface (113) surrounding the optical effective surface (111) and defining an edge contour (1131), and the edge contour (1131) defining a maximum contour area; and
        a connecting surface (114) connecting the optical effective surface (111) and the outer diameter surface (113); and

    an optical reflecting element embedded carrier (120) for fixing the optical reflecting element (110), and the optical reflecting element (110) being embedded thereinto, wherein the optical reflecting element (110) and the optical reflecting element embedded carrier (120) are integrally formed by insert molding;
    wherein the optical effective surface (111) is planar;
    wherein the optical reflecting element embedded carrier (120) comprises a covering portion (121) disposed on the connecting surface (114);
    wherein the edge contour (1131) of the outer diameter surface (113) is covered by the covering portion (121) of the optical reflecting element embedded carrier (120) corresponding to an observation along a direction parallel to the normal axis (N);
    wherein the maximum contour area is Ac, the optical effective area is Ao, a height difference between the optical effective surface (111) and one surface of the covering portion (121) along the direction parallel to the normal axis (N) is $\Delta H$, and the following conditions are satisfied:

$$0 \text{ mm}^2 < Ao < Ac \leq 250 \text{ mm}^2;$$

    and

$$-0.15 \text{ mm} \leq \Delta H \leq 0.005 \text{ mm}.$$

2. The imaging lens assembly (100) of claim 1, wherein the optical reflecting element embedded carrier (120) further comprises a relative portion (122) disposed between the outer diameter surface (113) and the relative surface (112), and the covering portion (121) and the relative portion (122) are overlapped along the direction parallel to the normal axis (N).

3. The imaging lens assembly of claim 1, wherein the optical reflecting element embedded carrier (320) further comprises a relative portion (322) disposed between the outer diameter surface (313) and the relative surface (322), and the covering portion (321) and the relative portion (322) are not overlapped along the direction parallel to the normal axis (N).

4. The imaging lens assembly (100) of any of claims 1-3, wherein the optical effective surface (111) of the optical reflecting element (110) has a surface accuracy PV with a detection wavelength $\lambda$, an included angle $\theta'$ is between the incident light path (IL) and the normal axis (N), and the following conditions are satisfied:

$$PV < \lambda/5;$$

and

$$0 \text{ degrees} < \theta' < 90 \text{ degrees}.$$

5. The imaging lens assembly (100) of any of claims 1-4, wherein the maximum contour area is Ac, the optical effective area is Ao, and the following condition is satisfied:

$$0 \text{ mm}^2 < Ao < Ac \leq 200 \text{ mm}^2.$$

6. The imaging lens assembly (100) any of claims 1-5, wherein the height difference between the optical effective surface (111) and the surface of the covering portion (121) along the direction parallel to the normal axis (N) is $\Delta H$, and the following condition is satisfied:

$$-0.1 \text{ mm} \leq \Delta H \leq 0.003 \text{ mm}.$$

7. The imaging lens assembly (100) of any of claims 1-6, wherein the optical reflecting element embedded carrier (120) further comprises a positioning structure (124).

8. The imaging lens assembly (100) of any of claims 1-7, wherein the imaging lens assembly (100) has an optical axis (X), the optical axis (X) and the incident light path (IL) are parallel to each other.

9. A camera module (610, 620, 630, 640), comprising:

   the imaging lens assembly (100) of any of claims 1-8; and
   an image sensor disposed on an image surface of the camera module (610, 620, 630, 640).

10. An electronic device (600), comprising:
    the camera module (610, 620, 630, 640) of claim 9.

11. An imaging lens assembly (100), comprising:

    an optical reflecting element (110) having a normal axis (N), the optical reflecting element (110) for folding an incident light path (IL) into an exiting light path (EL) symmetrically relative to the normal axis (N), and comprising:

       an optical effective surface (111), the normal axis (N) passing through the optical effective surface (111) perpendicularly, wherein an area passed through by the normal axis (N) is defined as an optical effective area;
       a relative surface (112) disposed relatively to the optical effective surface (111);
       an outer diameter surface (113) surrounding the optical effective surface (111) and defining an edge contour (1131), and the edge contour (1131) defining a maximum contour area; and
       a connecting surface (114) connecting the optical effective surface (111) and the outer diameter surface (113); and

    an optical reflecting element embedded carrier (120) for fixing the optical reflecting element (110), and the optical reflecting element (110) being embedded thereinto, wherein the optical reflecting element (110) and the optical reflecting element embedded carrier (120) are integrally formed by insert molding;
    wherein the optical effective surface (111) is planar;
    wherein the optical reflecting element embedded carrier (120) comprises a covering portion (121) disposed on the connecting surface (114);
    wherein the edge contour (1131) of the outer diameter surface (113) is covered by the covering portion (121) of the optical reflecting element embedded carrier (120) corresponding to an observation along a direction parallel to the normal axis (N);

wherein the maximum contour area is Ac, the optical effective area is Ao, an angle of a range of the maximum contour area covered by the covering portion (121) along a circumferential direction around the normal axis (N) is θ, and the following conditions are satisfied:

$$0 \ mm^2 < Ao < Ac \le 250 \ mm^2;$$

and

$$180 \ degrees \le \theta \le 360 \ degrees.$$

12. The imaging lens assembly (100) of claim 11, wherein the optical reflecting element embedded carrier (120) further comprises a relative portion (122) disposed between the outer diameter surface (113) and the relative surface (112), and the covering portion (121) and the relative portion (122) are overlapped along the direction parallel to the normal axis (N).

13. The imaging lens assembly of claim 11, wherein the optical reflecting element embedded carrier (320) further comprises a relative portion (322) disposed between the outer diameter surface (313) and the relative surface (322), and the covering portion (321) and the relative portion (322) are not overlapped along the direction parallel to the normal axis (N).

14. The imaging lens assembly (100) of any of claims 11-13, wherein the optical effective surface (111) of the optical reflecting element (110) has a surface accuracy PV with a detection wavelength λ, an included angle θ' is between the incident light path (IL) and the normal axis (N), and the following conditions are satisfied:

$$PV < \lambda/5;$$

and

$$0 \ degrees < \theta' < 90 \ degrees.$$

15. The imaging lens assembly (100) of any of claims 11-14, wherein the maximum contour area is Ac, the optical effective area is Ao, and the following condition is satisfied:

$$0 \ mm^2 < Ao < Ac \le 200 \ mm^2.$$

16. An imaging lens assembly (100), comprising:

an optical reflecting element (100) having a normal axis (N), the optical reflecting element (100) for folding an incident light path (IL) into an exiting light path (EL) symmetrically relative to the normal axis (N), and comprising:

an optical effective surface (111), the normal axis (N) passing through the optical effective surface (111) perpendicularly, wherein an area passed through by the normal axis (N) is defined as an optical effective area;
a relative surface (112) disposed relatively to the optical effective surface (111);
an outer diameter surface (113) surrounding the optical effective surface (111) and defining an edge contour (1131), and the edge contour (1131) defining a maximum contour area; and
a connecting surface (114) connecting the optical effective surface (111) and the outer diameter surface (113); and

an optical reflecting element embedded carrier (120) for fixing the optical reflecting element (110), and the optical reflecting element (110) being embedded thereinto, wherein the optical reflecting element (110) and the optical reflecting element embedded carrier (120) are integrally formed by insert molding;
wherein the optical effective surface (111) is planar;
wherein the optical reflecting element embedded carrier (120) comprises a covering portion (121) disposed on the connecting surface (114);

wherein the edge contour (1131) of the outer diameter surface is covered by the covering portion (121) of the optical reflecting element embedded carrier (120) corresponding to an observation along a direction parallel to the normal axis (N);

wherein a height difference between the optical effective surface (111) and one surface of the covering portion (121) along the direction parallel to the normal axis (N) is $\Delta H$, and the following condition is satisfied:

$$-0.15 \text{ mm} \leq \Delta H \leq 0.005 \text{ mm}.$$

17. The imaging lens assembly (100) of claim 16, wherein the optical reflecting element embedded carrier (120) further comprises a relative portion (122) disposed between the outer diameter surface (113) and the relative surface (112), and the covering portion (121) and the relative portion (121) are overlapped along the direction parallel to the normal axis (N).

18. The imaging lens assembly of claim 16, wherein the optical reflecting element embedded carrier (320) further comprises a relative portion (322) disposed between the outer diameter surface (313) and the relative surface (322), and the covering portion (321) and the relative portion (322) are not overlapped along the direction parallel to the normal axis (N).

19. The imaging lens assembly (100) of any of claims 16-18, wherein the optical effective surface (111) of the optical reflecting element (110) has a surface accuracy PV with a detection wavelength $\lambda$, an included angle $\theta'$ is between the incident light path (IL) and the normal axis (N), and the following conditions are satisfied:

$$PV < \lambda/5;$$

and

$$0 \text{ degrees} < \theta' < 90 \text{ degrees}.$$

20. The imaging lens assembly (100) of any of claims 16-19, wherein the height difference between the optical effective surface (111) and the surface of the covering portion (121) along the direction parallel to the normal axis (N) is $\Delta H$, and the following condition is satisfied:

$$-0.1 \text{ mm} \leq \Delta H \leq 0.003 \text{ mm}.$$

21. An imaging lens assembly (100), comprising:

an optical reflecting element (110) having a normal axis (N), the optical reflecting element (110) for folding an incident light path (IL) into an exiting light path (EL) symmetrically relative to the normal axis (N), and comprising:

an optical effective surface (111), the normal axis (N) passing through the optical effective surface (111) perpendicularly, wherein an area passed through by the normal axis (N) is defined as an optical effective area;
a relative surface (112) disposed relatively to the optical effective surface (111);
an outer diameter surface (113) surrounding the optical effective surface (111) and defining an edge contour (1131), and the edge contour (1131) defining a maximum contour area; and
a connecting surface (114) connecting the optical effective surface (111) and the outer diameter surface (113); and

an optical reflecting element embedded carrier (120) for fixing the optical reflecting element (110), and the optical reflecting element (110) being embedded thereinto, wherein the optical reflecting element (110) and the optical reflecting element embedded carrier (120) are integrally formed by insert molding;
wherein the optical effective surface (111) is planar;
wherein the optical reflecting element embedded carrier (120) comprises a covering portion (121) disposed on the connecting surface (114);

wherein the edge contour (1131) of the outer diameter surface (113) is covered by the covering portion (121) of the optical reflecting element embedded carrier (120) corresponding to an observation along a direction parallel to the normal axis (N);

wherein the optical reflecting element embedded carrier (120) further comprises a stepping structure, the stepping structure comprises a stepping surface (123), and the stepping structure is disposed adjacent to the optical effective surface (111);

wherein a height difference between the stepping surface (123) and one surface (1211) of the covering portion (121) along the direction parallel to the normal axis (N) is ΔE, and the following condition is satisfied:

$$-0.25 \text{ mm} \leq \Delta E \leq 0.25 \text{ mm}.$$

22. The imaging lens assembly (100) of claim 21, wherein the optical reflecting element embedded carrier (120) further comprises a relative portion (122) disposed between the outer diameter surface (113) and the relative surface (112), and the covering portion (121) and the relative portion (122) are overlapped along the direction parallel to the normal axis (N).

23. The imaging lens assembly of claim 21, wherein the optical reflecting element embedded carrier (320) further comprises a relative portion (322) disposed between the outer diameter surface (313) and the relative surface (322), and the covering portion (321) and the relative portion (322) are not overlapped along the direction parallel to the normal axis (N).

24. The imaging lens assembly (100) of any of claims 21-23, wherein the optical effective surface (111) of the optical reflecting element (110) has a surface accuracy PV with a detection wavelength λ, an included angle θ' is between the incident light path (IL) and the normal axis (N), and the following conditions are satisfied:

$$PV < \lambda/5;$$

and

$$0 \text{ degrees} < \theta' < 90 \text{ degrees}.$$

25. The imaging lens assembly (100) of any of claims 21-24, wherein the height difference between the stepping surface (123) and the surface (1211) of the covering portion (121) along the direction parallel to the normal axis (N) is ΔE, and the following condition is satisfied:

$$-0.2 \text{ mm} \leq \Delta E \leq 0.2 \text{ mm}.$$

EP 4 582 845 A2

**100**

101

1012    1011

110

120

Fig. 1A

Fig. 1B

EP 4 582 845 A2

Fig. 1C

Fig. 1D

Fig. 1E

EP 4 582 845 A2

Fig. 1F

120

123

123

Fig. 1G

120

123        123

Fig. 1H

Fig. 1J

Fig. 1I

Fig. 1K

Fig. 1L

Fig. 1M

Fig. 1N

EP 4 582 845 A2

EP 4 582 845 A2

Fig. 1O

Fig. 1P

EP 4 582 845 A2

120

123

123

Fig. 1Q

120

123                    123

Fig. 1R

Fig. 1S

Fig. 1T

EP 4 582 845 A2

Fig. 1U

Fig. 1V

EP 4 582 845 A2

Fig. 1W

Fig. 2A

Fig. 2B

Fig. 2C

EP 4 582 845 A2

220

223

223

Fig. 2E

220

223

223

Fig. 2D

Fig. 2F

Fig. 2G

Fig. 2H

EP 4 582 845 A2

Fig. 2I

Fig. 2J

EP 4 582 845 A2

Fig. 2K

Fig. 3A

Fig. 3B

EP 4 582 845 A2

Fig. 3C

EP 4 582 845 A2

EP 4 582 845 A2

320

323

323

Fig. 3D

320

323

323

Fig. 3E

Fig. 3F

Fig. 3G

EP 4 582 845 A2

EP 4 582 845 A2

N

L1(L2)

324

310

311

320

312

L3

Fig. 3H

Fig. 3I

Fig. 3J

EP 4 582 845 A2

320

323

323

Fig. 3K

320

323                    323

Fig. 3L

EP 4 582 845 A2

Fig. 3M

EP 4 582 845 A2

Fig. 3N

Fig. 3O

EP 4 582 845 A2

Fig. 4A

Fig. 4B

Fig. 4C

EP 4 582 845 A2

420

423

423

Fig. 4E

420

423

423

Fig. 4D

EP 4 582 845 A2

Fig. 4F

Fig. 4G

EP 4 582 845 A2

Fig. 4H

Fig. 4I

Fig. 4J

Fig. 4K

Fig. 4M

Fig. 4L

Fig. 4O

Fig. 4N

Fig. 4P

Fig. 4Q

EP 4 582 845 A2

Fig. 5A

Fig. 5B

Fig. 5C

520

523

523

Fig. 5D

520

523          523

Fig. 5E

EP 4 582 845 A2

Fig. 5G

Fig. 5F

Fig. 5H

Fig. 5I

EP 4 582 845 A2

Fig. 6A

EP 4 582 845 A2

Fig. 6B

EP 4 582 845 A2

Fig. 6C

6E

Fig. 6D

Fig. 6E

Fig. 7

EP 4 582 845 A2

800

810

A1

Fig. 8A

800

810          810

810          810

Fig. 8B

Fig. 8C

900

910

Fig. 9

EP 4 582 845 A2